# EUROPEAN PATENT SPECIFICATION

(11) **EP 4 487 206 B1**
(45) Date of publication and mention of the grant of the patent: **19.08.2026**
(21) Application number: 22844602.7
(22) Date of filing: 12.12.2022
(51) Int. Cl.: G06F 8/51

(54) **SYNTHESIZING A COMPUTER PROGRAM TO INCLUDE IDIOMATIC FUNCTION(S) AND SEMANTICALLY-MEANINGFUL VARIABLE(S) USING PROGRAMMING BY EXAMPLE**
SYNTHESE EINES COMPUTERPROGRAMMS MIT IDIOMATISCHER FUNKTION(EN) UND SEMANTISCH-BEWUSSTER VARIABLEN MITHILFE VON PROGRAMMIERUNG DURCH BEISPIELE
SYNTHÈSE D'UN PROGRAMME INFORMATIQUE POUR Y COMPRENDRE UNE OU PLUSIEURS FONCTIONS IDIOMATIQUES ET UNE OU PLUSIEURS VARIABLES SÉMANTIQUEMENT SIGNIFICATIVES À L'AIDE D'UNE PROGRAMMATION PAR L'EXEMPLE

(30) Priority: 04.03.2022 US 202217687577
(43) Date of publication of application: 08.01.2025
(60) Divisional application: 26185660.3; 26185663.7 / 4 787 152
(73) Proprietor: Microsoft Technology Licensing, LLC, Redmond, WA 98052-6399 (US)
(72) Inventor: CAMBRONERO SÁNCHEZ, José Pablo, Redmond, WA 98052-6399 (US); GULWANI, Sumit, Redmond, WA 98052-6399 (US); LE, Vu Minh, Redmond, WA 98052-6399 (US); PERELMAN, Daniel, Redmond, WA 98052-6399 (US); RADHAKRISHNA, Arjun, Redmond, WA 98052-6399 (US); SIMMONS, Daniel Galen, Redmond, WA 98052-6399 (US); SIMON, Clint Michael, Redmond, WA 98052-6399 (US); TIWARI, Ashish, Redmond, WA 98052-6399 (US)
(74) Representative: Grünecker Patent- und Rechtsanwälte PartG mbB
(86) International application number: PCT/US2022/052604
(87) International publication number: WO 2023/167731

(56) References cited:
- DE-A1- 102013 212 266

## Description

### BACKGROUND

Programming by example is a computer program development technique in which example input(s) and corresponding example output(s) are provided to a program synthesizer to teach the program synthesizer functionality to be incorporated into a computer program. For instance, programming by example may enable a person who is not a professional software developer to create or modify a computer program.

A variety of programming by example techniques have been proposed. However, each such technique has its limitations. For example, computer programs that are synthesized using conventional programming by example techniques typically are relatively complex (e.g., more complex than necessary), include non-conventional functions and combinations thereof, and use template-based variable names that are unnatural or contextually non-intuitive. For instance, a pre-defined name template may be populated with a counter that is incremented to produce new variable names. Traditionally, the synthesized computer programs are not presented for viewing by a user and are not designed to be human-readable.

The underlying domain-specific language (DSL) that is used to generate a computer program in accordance with the conventional programming by example techniques often is relatively unexpressive. The underlying DSL may be relatively small and ambiguous, and searching in the DSL may be relatively inefficient. The conventional programming by example techniques usually require a user to manually inspect the outputs that are produced when the synthesized computer programs are applied to unlabeled inputs. The conventional programming by example techniques usually do not provide a way to gauge confidence in the synthesized computer programs or to provide feedback regarding the synthesized computer programs.

DE 10 2013 212266 A1 discloses the apparatus that has a calculating section that calculates an access load level of each object, and a variable which is defined in a source code. A mapping section assigns the selected object to a multi-core of a multi-core processor, to decrease the access load level between one object and other object. An assembly section arranges the variable associated with object, in a RAM of the multi-core. A representation section represents the assigning result of each object, which is carried out by an allocation section. An independent claim is included for a program development support tool for operating a PC.

### SUMMARY

It is the object of the present invention to provide an improved method and system of synthesizing a computer program using programming by example.

This object is solved by the subject matter of the independent claims.

Preferred embodiments are defined by the dependent claims.

Various approaches are described herein for, among other things, synthesizing a computer program to include idiomatic function(s) and semantically-meaningful variable(s) using programming by example. An idiomatic function is a function (e.g., a code snippet or a statement) that conforms to a convention (e.g., generally accepted practices) of a target domain-specific language, which is associated with a textual representation of a computer program that is to be displayed to a user. For example, the idiomatic function may be configured to perform a common task in a common way for the target domain-specific language. In another example, the idiomatic function may include at least one idiom that is associated with (e.g., specific to) the target domain-specific language. A semantically-meaningful variable is a variable having a name that is derived from a vocabulary of a language and that is based at least in part on a context in which the semantically-meaningful variable is used. For instance, the semantically-meaningful variable may have a name that is associated with a lexicon.

In an example approach, an intent of a user to synthesize a computer program to include functionality that is configured to generate sample output(s) from respective input(s) is determined based at least in part on receipt of information, which includes the sample input(s) and the respective sample output(s), from the user. Based at least in part on the determined intent, the computer program is synthesized to include idiomatic function(s) by configuring the idiomatic function(s) to have the functionality and to conform to a convention of a target domain-specific language, which is associated with a textual representation of the computer program that is to be displayed to the user. At least one non-semantically-meaningful variable that is included among the idiomatic function(s) is replaced with at least one respective semantically-meaningful variable. Each semantically-meaningful variable has a name that is derived from a vocabulary of a language and is based at least in part on a context in which the semantically-meaningful variable is used. Each non-semantically-meaningful variable has a name that is not derived from the vocabulary of the language and/or is not based at least in part on the context in which the semantically-meaningful variable is used. The textual representation of the computer program, including the idiomatic function(s) and the at least one semantically-meaningful variable therein, is caused to be displayed to the user from whom the sample input(s) and the respective sample output(s) are received.

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter. Moreover, it is noted that the invention is not limited to the specific embodiments described in the Detailed Description and/or other sections of this document. Such embodiments are presented herein for illustrative purposes only. Additional embodiments will be apparent to persons skilled in the relevant art(s) based on the teachings contained herein.

### BRIEF DESCRIPTION OF THE DRAWINGS

The accompanying drawings, which are incorporated herein and form part of the specification, illustrate embodiments of the present invention and, together with the description, further serve to explain the principles involved and to enable a person skilled in the relevant art(s) to make and use the disclosed technologies.
FIG. 1 is a block diagram of an example semantic idiomatic program synthesis system in accordance with an embodiment.
FIG. 2 depicts a flowchart of an example method for synthesizing a computer program to include idiomatic function(s) and semantically-meaningful variable(s) using programming by example in accordance with an embodiment.
FIG. 3 depicts a flowchart of an example method for replacing each of the non-semantically-meaningful variable(s) with the respective semantically-meaningful variable in accordance with an embodiment.
FIG. 4 depicts a flowchart of an example method for using holistic ranking to select the replacement computer program in accordance with an embodiment.
FIG. 5 depicts a flowchart of an example method for soliciting a ground truth output that corresponds to a significant input of the computer program in accordance with an embodiment.
FIG. 6 is a block diagram of an example computing system in accordance with an embodiment.
FIGS. 7 and 8 depict example computer programs in accordance with embodiments.
FIGS. 9 and 10 show example domain-specific language for respective program synthesizers in accordance with embodiments.
FIG. 11 shows a table in which example variables have been renamed in accordance with an embodiment.
FIG. 12 is a system diagram of an example mobile device in accordance with an embodiment.

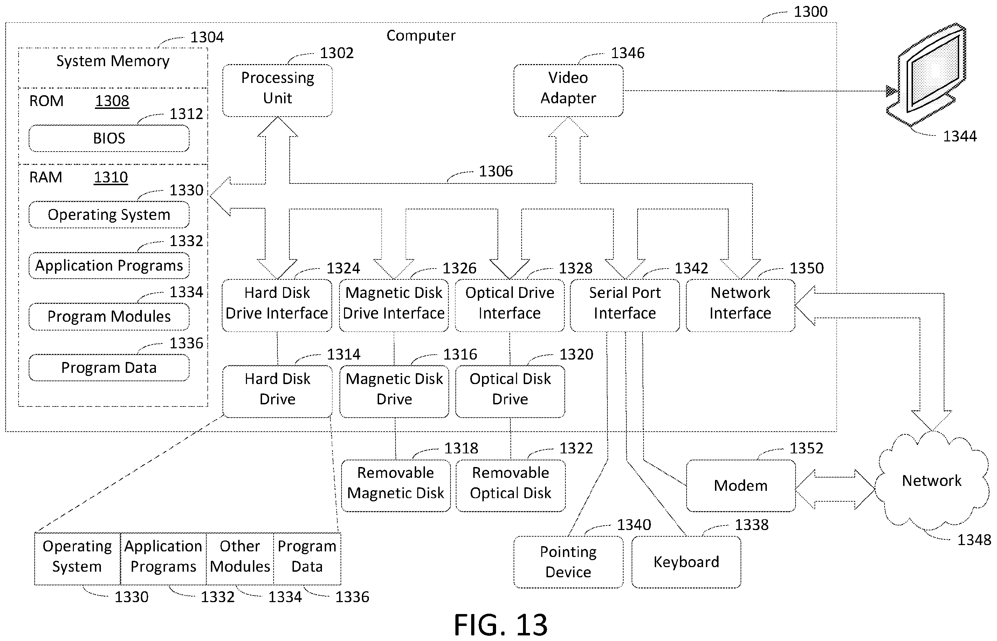

FIG. 13 depicts an example computer in which embodiments may be implemented.

The features and advantages of the disclosed technologies will become more apparent from the detailed description set forth below when taken in conjunction with the drawings, in which like reference characters identify corresponding elements throughout. In the drawings, like reference numbers generally indicate identical, functionally similar, and/or structurally similar elements. The drawing in which an element first appears is indicated by the leftmost digit(s) in the corresponding reference number.

### DETAILED DESCRIPTION

### I. Introduction

The following detailed description refers to the accompanying drawings that illustrate exemplary embodiments of the present invention. However, the scope of the present invention is not limited to these embodiments, but is instead defined by the appended claims. Thus, embodiments beyond those shown in the accompanying drawings, such as modified versions of the illustrated embodiments, may nevertheless be encompassed by the present invention. References in the specification to "one embodiment," "an embodiment," "an example embodiment," or the like, indicate that the embodiment described may include a particular feature, structure, or characteristic, but every embodiment may not necessarily include the particular feature, structure, or characteristic. Moreover, such phrases are not necessarily referring to the same embodiment. Furthermore, when a particular feature, structure, or characteristic is described in connection with an embodiment, it is submitted that it is within the knowledge of one skilled in the relevant art(s) to implement such feature, structure, or characteristic in connection with other embodiments whether or not explicitly described. Descriptors such as "first", "second", "third", etc. are used to reference some elements discussed herein. Such descriptors are used to facilitate the discussion of the example embodiments and do not indicate a required order of the referenced elements, unless an affirmative statement is made herein that such an order is required.

### II. Example Embodiments

Example embodiments described herein are capable of synthesizing a computer program to include idiomatic function(s) and semantically-meaningful variable(s) using programming by example. An idiomatic function is a function (e.g., a code snippet or a statement) that conforms to a convention (e.g., generally accepted practices) of a target domain-specific language, which is associated with a textual representation of a computer program that is to be displayed to a user. For example, the idiomatic function may be configured to perform a common task in a common way for the target domain-specific language. In another example, the idiomatic function may include at least one idiom that is associated with (e.g., specific to) the target domain-specific language. A semantically-meaningful variable is a variable having a name that is derived from a vocabulary of a language and that is based at least in part on a context in which the semantically-meaningful variable is used. For instance, the semantically-meaningful variable may have a name that is associated with a lexicon.

Example techniques described herein have a variety of benefits as compared to conventional techniques for synthesizing a computer program using programming by example. For instance, the example techniques may be capable of generating a computer program that is less complex and easier to read, as compared to the conventional techniques. For example, the computer program may include conventional functions and combinations thereof, use natural or contextually intuitive variable names, and be human-readable. For instance, mechanistically derived intermediate variable names may be replaced with the natural or contextually intuitive variable names by querying a pre-trained language model with a prompt that includes the generated code up to (and excluding) the next intermediate variable name that is to be renamed. Each instance of the intermediate variable name may be replaced with the natural or contextually intuitive variable name throughout the synthesized computer program.

The example techniques may use an underlying domain-specific language (DSL) that is more expressive than DSL used by the conventional techniques, and searching in the underlying DSL may be more efficient. For instance, the underlying DSL may incorporate operations that are sufficiently expressive for common string transformations while being more closely aligned with the string operations available in common programming languages, such as the Excel^{®} formula language, the Python^{™} programming language, and the PowerFx^{™} programming language. For example, the underlying DSL may incorporate string splitting on a constant substring and/or string slicing. In another example, dates and/or times may be extracted from an existing string into any of multiple date-time formats. In yet another example, numbers may be extracted from an existing string into any of multiple number formats. The underlying DSL may contribute to simplification of a synthesized computer program and to causing the synthesized computer program to be human-readable. For instance, the synthesized computer program may be readable in a variety of target languages.

The example techniques may be capable of presenting a synthesized computer program for viewing by a user. By enabling the synthesized computer program to be presented for viewing by the user, the example techniques may enable the user to gauge and increase confidence in the synthesized computer program. The example techniques may enable the user to provide feedback regarding the synthesized computer program. The example techniques may obviate a need for a user to manually inspect outputs that are produced when the computer program is applied to unlabeled inputs.

The example techniques may utilize a guarded context-free grammar, which may enable a search procedure to be discontinued if a suitable computer program is produced by one of the earlier options detailed in the guarded context-free grammar. By expressing coarse preferences via the guarded context-free grammar, a relatively simpler program ranking mechanism may be used. For instance, a holistic ranking mechanism may be employed to compute program features over the leaves in the synthesized computer program (e.g., along with penalties based on internal node operators), rather than strictly compositionally based on sub-programs. Utilization of the guarded context-free grammar and the holistic ranking mechanism may increase efficiency and simplicity of the computer program synthesis process.

The example techniques may be capable of presenting selected inputs of a synthesized computer program to a user for annotation. The selected inputs may be those having corresponding outputs for which an uncertainty is greater than a user-defined threshold. If the outputs for all corresponding inputs have an uncertainty that is less than the user-defined threshold, the user need not necessarily be contacted for purposes of annotation. Accordingly, the example techniques may reduce the number of inputs that a user manually validates.

The example techniques may reduce an amount of time and/or resources (e.g., processor cycles, memory, network bandwidth) that is consumed to validate outputs that are produced by a synthesized computer program based on (e.g., based at least in part on) respective inputs. For example, by identifying a subset of the inputs based on each input in the subset constituting a significant input, such validation efforts can be limited to only those outputs corresponding to inputs that are included in the subset. The example techniques may reduce an amount of time and/or resources that is consumed to modify a synthesized computer program to include user-defined functionality. For example, by configuring the synthesized computer program to be human-readable, the example techniques may enable a user to more quickly determine a change that is to be made to the synthesized computer program to achieve the user-defined functionality. In accordance with this example, the user (or a computing system that is used by the user to determine the change) may consume less time and/or resources.

By configuring a synthesized computer program to be human readable, the example techniques may increase efficiency of a user who provides sample input(s) and sample output(s) on which the synthesized computer program is based. For instance, the human-readability of the synthesized computer program may reduce an amount of time that the user spends to establish confidence in the synthesized computer program and/or to identify changes that are to be made to the synthesized computer program to achieve a desired functionality.

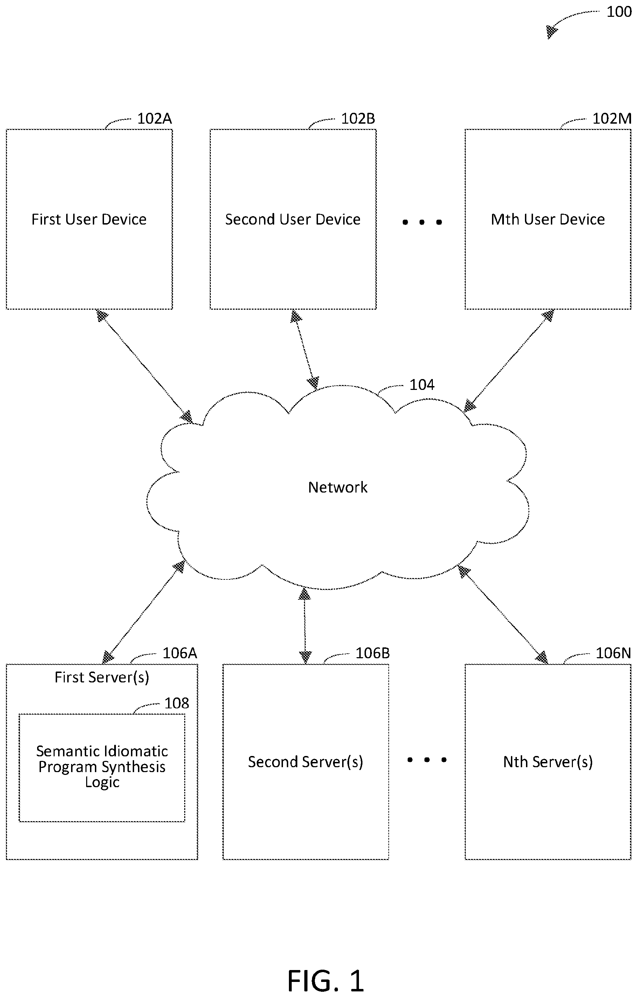

FIG. 1 is a block diagram of an example semantic idiomatic program synthesis system 100 in accordance with an embodiment. Generally speaking, the semantic idiomatic program synthesis system 100 operates to provide information to users in response to requests (e.g., hypertext transfer protocol (HTTP) requests) that are received from the users. The information may include documents (Web pages, images, audio files, video files, etc.), output of executables, and/or any other suitable type of information. In accordance with example embodiments described herein, the semantic idiomatic program synthesis system 100 synthesizes a computer program to include idiomatic function(s) and semantically-meaningful variable(s) using programming by example. Detail regarding techniques for synthesizing a computer program to include idiomatic function(s) and semantically-meaningful variable(s) using programming by example is provided in the following discussion.

As shown in FIG. 1, the semantic idiomatic program synthesis system 100 includes a plurality of user devices 102A-102M, a network 104, and a plurality of servers 106A-106N. Communication among the user devices 102A-102M and the servers 106A-106N is carried out over the network 104 using well-known network communication protocols. The network 104 may be a wide-area network (e.g., the Internet), a local area network (LAN), another type of network, or a combination thereof.

The user devices 102A-102M are processing systems that are capable of communicating with servers 106A-106N. An example of a processing system is a system that includes at least one processor that is capable of manipulating data in accordance with a set of instructions. For instance, a processing system may be a computer, a personal digital assistant, etc. The user devices 102A-102M are configured to provide requests to the servers 106A-106N for requesting information stored on (or otherwise accessible via) the servers 106A-106N. For instance, a user may initiate a request for executing a computer program (e.g., an application) using a client (e.g., a Web browser, Web crawler, or other type of client) deployed on a user device 102 that is owned by or otherwise accessible to the user. In accordance with some example embodiments, the user devices 102A-102M are capable of accessing domains (e.g., Web sites) hosted by the servers 104A-104N, so that the user devices 102A-102M may access information that is available via the domains. Such domain may include Web pages, which may be provided as hypertext markup language (HTML) documents and objects (e.g., files) that are linked therein, for example.

Each of the user devices 102A-102M may include any client-enabled system or device, including but not limited to a desktop computer, a laptop computer, a tablet computer, a wearable computer such as a smart watch or a head-mounted computer, a personal digital assistant, a cellular telephone, an Internet of things (IoT) device, or the like. It will be recognized that any one or more of the user devices 102A-102M may communicate with any one or more of the servers 106A-106N.

The servers 106A-106N are processing systems that are capable of communicating with the user devices 102A-102M. The servers 106A-106N are configured to execute computer programs that provide information to users in response to receiving requests from the users. For example, the information may include documents (Web pages, images, audio files, video files, etc.), output of executables, or any other suitable type of information. Any one or more of the computer programs may be a cloud computing service. A cloud computing service is a service that executes at least in part in the cloud. The cloud may be a remote cloud, an on-premises cloud, or a hybrid cloud. It will be recognized that an on-premises cloud may use remote cloud services. Examples of a cloud computing service include but are not limited to Microsoft 365^{®} (or Excel^{®} or Word^{™} therein) developed and distributed by Microsoft Corporation, Google Docs Editors^{™} (or Google Sheets^{™} or Google Docs^{™} therein) developed and distributed by Google Inc., and iWork^{®} (or Numbers^{™} or Pages^{™} therein) developed and distributed by Apple Inc. In accordance with some example embodiments, the servers 106A-106N are configured to host respective Web sites, so that the Web sites are accessible to users of the semantic idiomatic program synthesis system 100.

The first server(s) 106A are shown to include semantic idiomatic program synthesis logic 108 for illustrative purposes. The semantic idiomatic program synthesis logic 108 is configured to synthesize a computer program to include idiomatic function(s) and semantically-meaningful variable(s) using programming by example. In an example implementation, the semantic idiomatic program synthesis logic 108 determines an intent of a user to synthesize the computer program to include functionality that is configured to generate sample output(s) based on (e.g., based at least in part on) respective input(s) as a result of receiving information, which includes the sample input(s) and the respective sample output(s), from the user. The semantic idiomatic program synthesis logic 108 synthesizes the computer program to include the idiomatic function(s) by configuring the idiomatic function(s) to have the functionality and to conform to a convention of a target domain-specific language, which is associated with a textual representation of the computer program that is to be displayed to the user, based at least in part on the determined intent. The semantic idiomatic program synthesis logic 108 replaces at least one non-semantically-meaningful variable that is included among the idiomatic function(s) with at least one respective semantically-meaningful variable. Each semantically-meaningful variable has a name that is derived from a vocabulary of a language and is based at least in part on a context in which the semantically-meaningful variable is used. Each non-semantically-meaningful variable has a name that is not derived from the vocabulary of the language and/or is not based at least in part on the context in which the semantically-meaningful variable is used. The semantic idiomatic program synthesis logic 108 causes the textual representation of the computer program, including the idiomatic function(s) and the at least one semantically-meaningful variable therein, to be displayed to the user from whom the sample input(s) and the respective sample output(s) are received.

The computer program may be configured to perform any of a variety of operations. For example, the sample input(s) may be in a first column of a table, and the sample output(s) may be in a second column of the table. In accordance with this example, the computer program may be configured to automatically fill additional values (i.e., outputs) in the second column based on other corresponding values (i.e., inputs) in the first column.

The semantic idiomatic program synthesis logic 108 may use machine leaming to perform at least some of its operations. For instance, the semantic idiomatic program synthesis logic 108 may use the machine learning to develop and refine the computer program that is synthesized by the semantic idiomatic program synthesis logic 108, including the idiomatic function(s) and/or the semantically-meaningful variable(s) therein, and/or a language model that is used to determine the semantically-meaningful variable(s). The semantic idiomatic program synthesis logic 108 may use the machine learning to analyze the sample input(s) that are received from the user, the corresponding sample output(s) that are received from the user, functionality of functions that are available to be incorporated into the computer program, names of variables in one or more of those functions, and/or other synthesized computer programs to synthesize the computer program to include the idiomatic function(s) and the semantically-meaningful variable(s).

The semantic idiomatic program synthesis logic 108 may use a neural network to perform the machine learning to synthesize a computer program to include idiomatic function(s) and semantically-meaningful variable(s) using programming by example. Examples of a neural network include but are not limited to a feed forward neural network and a long short-term memory (LSTM) neural network. A feed forward neural network is an artificial neural network for which connections between units in the neural network do not form a cycle. In an example embodiment, the semantic idiomatic program synthesis logic 108 employs a feed forward neural network to train a machine leaming model that is used to determine ML-based confidences. Such ML-based confidences may be used to determine likelihoods that events will occur.

An LSTM neural network is a recurrent neural network that has memory and allows data to flow forward and backward in the neural network. The LSTM neural network is capable of remembering values for short time periods or long time periods. Accordingly, the LSTM neural network may keep stored values from being iteratively diluted over time. In one example, the LSTM neural network may be capable of storing information, such as the sample input(s) that are received from the user, the corresponding sample output(s) that are received from the user, functionality of functions, names of variables, and/or other synthesized computer programs over time. For instance, the LSTM neural network may synthesize the computer program by utilizing such information. In another example, the LSTM neural network may be capable of remembering relationships between features, such as sample input(s), sample output(s), functionality of functions, names of variables, other synthesized computer programs, probabilities that the functions define relationships between sample inputs and sample outputs, and ML-based confidences that are derived therefrom.

The semantic idiomatic program synthesis logic 108 may include training logic and inference logic. The training logic is configured to train a machine learning algorithm that the inference logic uses to determine (e.g., infer) the ML-based confidences. For instance, the training logic may provide sample inputs, sample outputs, sample functionality of functions, sample names of variables, sample synthesized computer programs sample probabilities that the functions define relationships between the sample inputs and the sample outputs, and sample confidences as inputs to the algorithm to train the algorithm. The sample data may be labeled. The machine learning algorithm may be configured to derive relationships between the features (e.g., sample input(s), sample output(s), functionality of functions, names of variables, other synthesized computer programs, probabilities that the functions define relationships between sample inputs and sample outputs) and the resulting ML-based confidences. The inference logic is configured to utilize the machine leaming algorithm, which is trained by the training logic, to determine the ML-based confidence when the features are provided as inputs to the algorithm.

The semantic idiomatic program synthesis logic 108 may be implemented in various ways to synthesize a computer program to include idiomatic function(s) and semantically-meaningful variable(s) using programming by example, including being implemented in hardware, software, firmware, or any combination thereof. For example, the semantic idiomatic program synthesis logic 108 may be implemented as computer program code configured to be executed in one or more processors. In another example, at least a portion of the semantic idiomatic program synthesis logic 108 may be implemented as hardware logic/electrical circuitry. For instance, at least a portion of the semantic idiomatic program synthesis logic 108 may be implemented in a field-programmable gate array (FPGA), an application-specific integrated circuit (ASIC), an application-specific standard product (ASSP), a system-on-a-chip system (SoC), a complex programmable logic device (CPLD), etc. Each SoC may include an integrated circuit chip that includes one or more of a processor (a microcontroller, microprocessor, digital signal processor (DSP), etc.), memory, one or more communication interfaces, and/or further circuits and/or embedded firmware to perform its functions.

The semantic idiomatic program synthesis logic 108 may be partially or entirely incorporated in a cloud computing service, though the example embodiments are not limited in this respect.

The semantic idiomatic program synthesis logic 108 is shown to be incorporated in the first server(s) 106A for illustrative purposes and is not intended to be limiting. It will be recognized that the semantic idiomatic program synthesis logic 108 (or any portion(s) thereof) may be incorporated in any one or more of the user devices 102A-102M. For example, client-side aspects of the semantic idiomatic program synthesis logic 108 may be incorporated in one or more of the user devices 102A-102M, and server-side aspects of semantic idiomatic program synthesis logic 108 may be incorporated in the first server(s) 106A. In another example, the semantic idiomatic program synthesis logic 108 may be distributed among the user devices 102A-102M. In yet another example, the semantic idiomatic program synthesis logic 108 may be incorporated in a single one of the user devices 102A-102M. In another example, the semantic idiomatic program synthesis logic 108 may be distributed among the server(s) 106A-106N. In still another example, the semantic idiomatic program synthesis logic 108 may be incorporated in a single one of the servers 106A-106N.

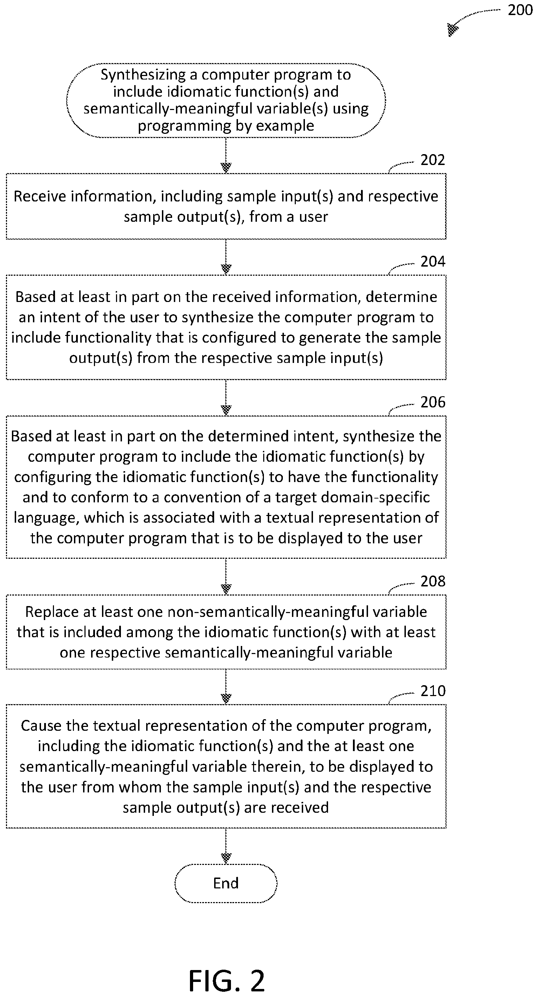

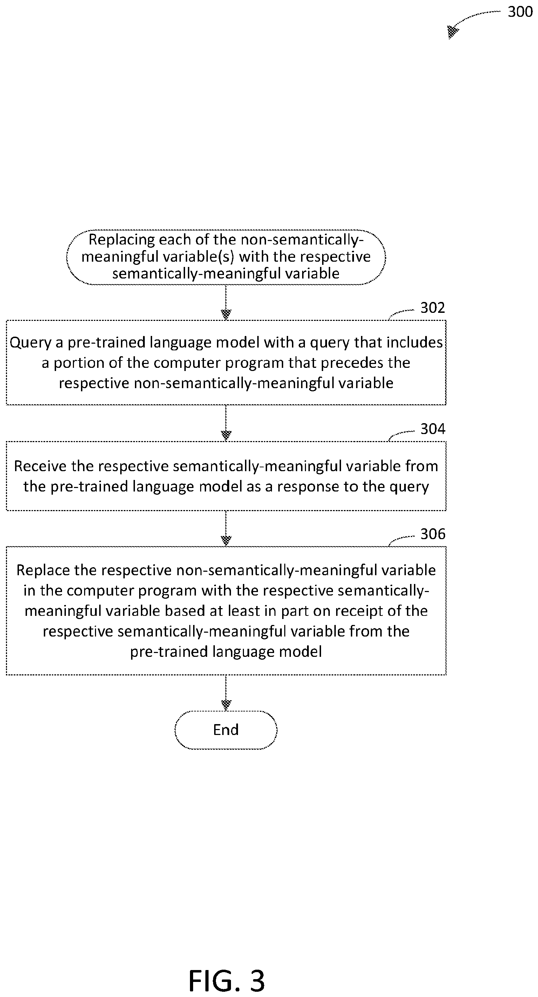

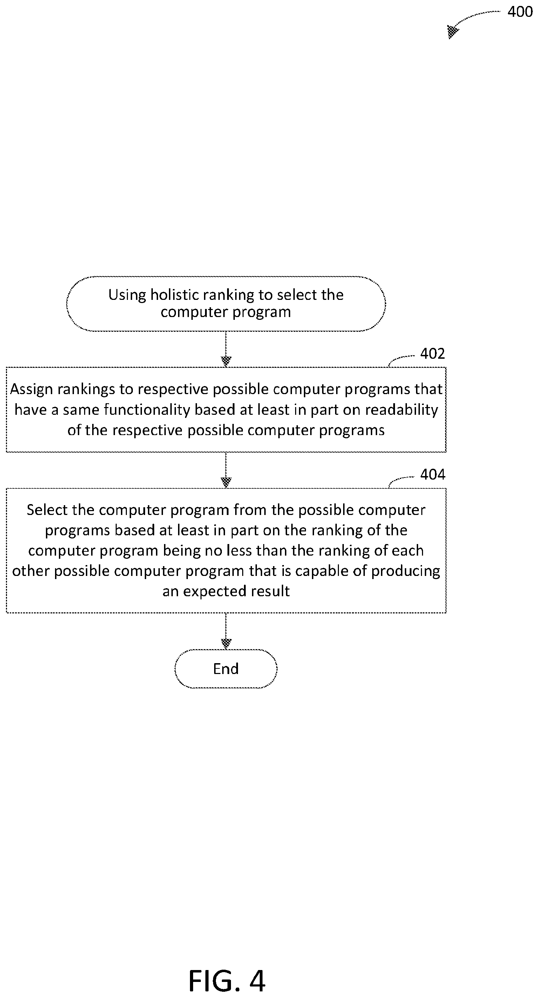

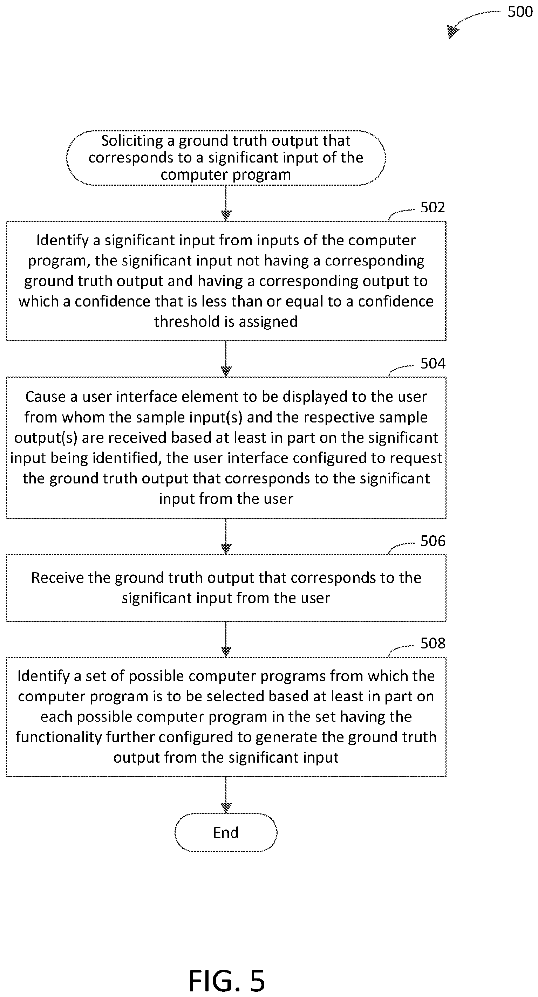

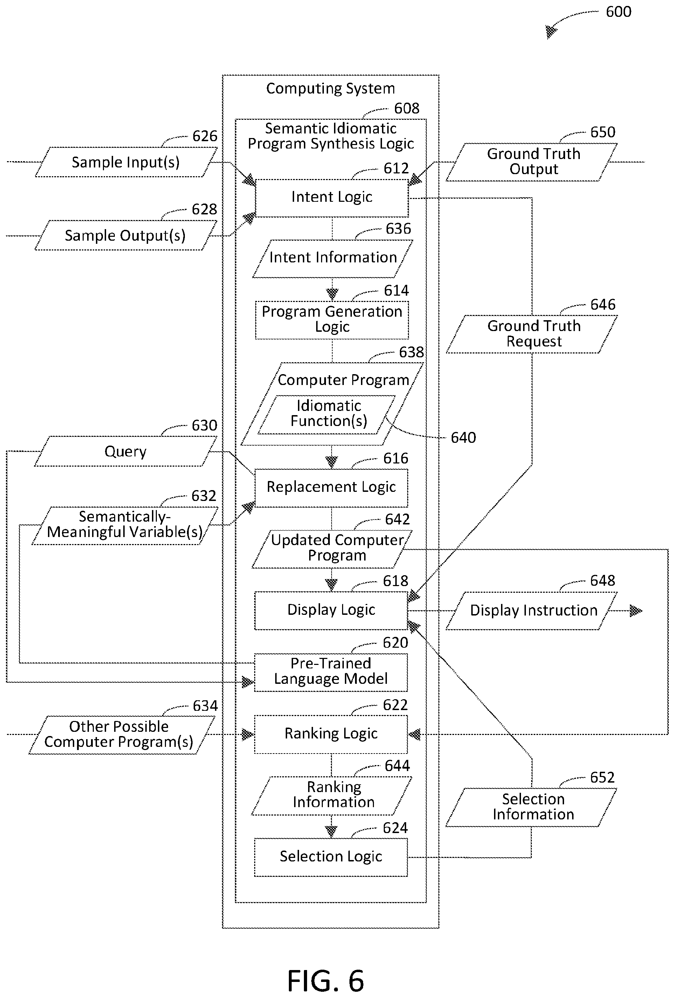

FIG. 2 depicts a flowchart 200 of an example method for synthesizing a computer program to include idiomatic function(s) and semantically-meaningful variable(s) using programming by example in accordance with an embodiment. FIG. 3 depicts a flowchart 300 of an example method for replacing each of the non-semantically-meaningful variable(s) with the respective semantically-meaningful variable in accordance with an embodiment. FIG. 4 depicts a flowchart 400 of an example method for using holistic ranking to select the replacement computer program in accordance with an embodiment. FIG. 5 depicts a flowchart 500 of an example method for soliciting a ground truth output that corresponds to a significant input of the computer program in accordance with an embodiment. Flowcharts 200, 300, 400, and 500 may be performed by the first server(s) 106A shown in FIG. 1, for example. For illustrative purposes, flowcharts 200, 300, 400, and 500 are described with respect to computing system 600 shown in FIG. 6, which is an example implementation of the first server(s) 106A. As shown in FIG. 6, the computing system 600 includes semantic idiomatic program synthesis logic 608. The semantic idiomatic program synthesis logic 608 includes intent logic 612, program generation logic 614, replacement logic 616, display logic 618, a pre-trained language model 620, ranking logic 622, and selection logic 624. Further structural and operational embodiments will be apparent to persons skilled in the relevant art(s) based on the discussion regarding flowcharts 200, 300, 400, and 500.

As shown in FIG. 2, the method of flowchart 200 begins at step 202. In step 202, information, including sample input(s) and respective sample output(s), is received from a user. In an example implementation, the intent logic 612 receives the information, including sample input(s) 626 and sample output(s) 628, from the user.

At step 204, based at least in part on the received information, an intent of the user to synthesize the computer program to include functionality that is configured to generate the sample output(s) from the respective input(s) is determined. In an example implementation, based at least in part on the received information, the intent logic 612 determines the intent of the user to synthesize the computer program 638 to include functionality that is configured to generate the sample output(s) 628 from the respective sample input(s) 626. The intent logic 612 may generate intent information 636 to indicate the determined intent. For instance, the intent information 636 may indicate the functionality that is to be included in the computer program. The intent information 636 may further indicate the sample input(s) 626 and the sample output(s) 628.

At step 206, based at least in part on the determined intent, the computer program is synthesized to include the idiomatic function(s) by configuring the idiomatic function(s) to have the functionality and to conform to a convention of a target domain-specific language, which is associated with a textual representation of the computer program that is to be displayed to the user. The idiomatic functions may be configured to mimic human-written functions. For instance, the idiomatic functions may be derived based on (e.g., based at least in part on) analysis of historical human-written functions. Examples of a domain-specific language include but are not limited to the Excel^{®} formula language, the Python^{™} programming language, and the PowerFx^{™} programming language. In an example implementation, the program generation logic 614 synthesizes the computer program 638 to include the idiomatic function(s) 640 by configuring the idiomatic function(s) 640 to have the functionality and to conform to the convention of the target domain-specific language, based at least in part on the determined intent that is indicated by the intent information 636. Synthesizing the computer program 638 to include the idiomatic function(s) 640 may reduce an amount of time and/or resources that is consumed by the computing system 600 to modify the computer program 638 to include user-defined functionality and/or may increase efficiency of the user (e.g., by causing the computer program 638 to be less complex and/or more human-readable).

In an example embodiment, synthesizing the computer program at step 206 includes selecting an idiomatic function of the idiomatic function(s) from multiple possible idiomatic functions by using a guarded context-free grammar. The guarded context-free grammar includes multiple ordered rules having multiple respective rankings in a hierarchical ranking order. The ordered rules are configured to generate the respective possible idiomatic functions. The idiomatic function is selected based at least in part on the ranking corresponding to the idiomatic function relative to the ranking corresponding to each other possible idiomatic function. Describing the context-free grammar as "guarded" means that the ordered rules that are ranked lower in the hierarchical ranking order than the ordered rule that is configured to generate the selected idiomatic function are not taken into consideration as a result of the selected idiomatic function being selected.

In another example embodiment, synthesizing the computer program at step 206 includes configuring at least one of the idiomatic function(s) to extract date-time information from a string, select a date-time format from multiple date-time formats based at least in part on a determination that a sample output of the sample output(s) results from application of the selected date-time format to a corresponding sample input of the sample input(s), and apply the selected date-time format to the date-time information that is extracted from the string. The date-time information indicates a date and/or a time.

In yet another example embodiment, synthesizing the computer program at step 206 includes configuring at least one of the idiomatic function(s) to extract a number from a string, select a number format from multiple number formats based at least in part on a determination that a sample output of the sample output(s) results from application of the selected number format to a corresponding sample input of the sample input(s), and apply the selected number format to the number that is extracted from the string.

At step 208, at least one non-semantically-meaningful variable that is included among the idiomatic function(s) is replaced with at least one respective semantically-meaningful variable. Each semantically-meaningful variable has a name that is derived from a vocabulary of a language and is based at least in part on a context in which the semantically-meaningful variable is used. Each non-semantically-meaningful variable has a name that is not derived from the vocabulary of the language and/or is not based at least in part on the context in which the semantically-meaningful variable is used. In an example implementation, the replacement logic 616 replaces at least one non-semantically-meaningful variable that is included among the idiomatic function(s) 640 with at least one respective semantically-meaningful variable 632 to provide an updated computer program 642. Replacing at least one non-semantically-meaningful variable that is included among the idiomatic function(s) 640 with at least one respective semantically-meaningful variable 632 may reduce an amount of time and/or resources that is consumed by the computing system 600 to modify the computer program 638 to include user-defined functionality and/or may increase efficiency of the user (e.g., by causing the computer program 638 to be more human-readable).

At step 210, the textual representation of the computer program, including the idiomatic function(s) and the at least one semantically-meaningful variable therein, is caused to be displayed to the user from whom the sample input(s) and the respective sample output(s) are received. For instance, causing the textual representation of the computer program to be displayed to the user may enable the user to understand the functionality that is defined by the computer program. In an example implementation, the display logic 618 causes the textual representation of the updated computer program 642, which includes the idiomatic function(s) 640 and the at least one semantically-meaningful variable 632 therein, to be displayed to the user from whom the sample input(s) 626 and the respective sample output(s) 628 are received. For instance, the display logic 618 may generate a display instruction 648, which is configured to cause the textual representation of the updated computer program 642 to be displayed. Causing the textual representation of the updated computer program 642 to be displayed to the user may reduce an amount of time and/or resources that is consumed by the computing system 600 to modify the updated computer program 642 to include user-defined functionality and/or may increase efficiency of the user (e.g., by reducing an amount of time that the user spends to establish confidence in the updated computer program 642 and/or to identify changes that are to be made to the updated computer program 642 to achieve the user-defined functionality).

In an example embodiment, the method of flowchart 200 further includes identifying a designated non-semantically-meaningful variable using a string splitting technique or a string splicing technique. The at least one non-semantically-meaningful variable includes the designated non-semantically-meaningful variable. A string splitting technique is a technique in which multiple portions of a string are defined based on delimiter(s) in the string. For instance, consecutive portions of the string may be separated by a respective delimiter. A string slicing technique is a technique in which a portion of a string is defined based on a starting point and an ending point of the portion. For instance, the portion may be defined by a pattem having identifiable starting and ending points.

In some example embodiments, one or more steps 202, 204, 206, 208, and/or 210 of flowchart 200 may not be performed. Moreover, steps in addition to or in lieu of steps 202, 204, 206, 208, and/or 210 may be performed. For instance, in an example embodiment, the method of flowchart 200 includes one or more of the steps shown in flowchart 300 of FIG. 3. The steps shown in flowchart 300 are performed for each of the non-semantically-meaningful variable(s). As shown in FIG. 3, the method of flowchart 300 begins at step 302. In step 302, a pre-trained language model is queried with a query that includes a portion of the computer program that precedes the respective non-semantically-meaningful variable. In an example implementation, the replacement logic 616 queries the pre-trained language model 620 with a query 630 that includes the portion of the computer program 638 that precedes the respective non-semantically-meaningful variable. The language model 620 may be pre-trained on human-written code, though the example embodiments are not limited in this respect. The human-written code may be stored locally in the computing system 600 or retrieved via a network (e.g., the Internet) from a source that is external to the computing system 600.

At step 304, the respective semantically-meaningful variable is received from the pre-trained language model as a response to the query. In an example implementation, the replacement logic 616 receives the respective semantically-meaningful variable 632 from the pre-trained language model 620 as a response to the query 630.

At step 306, the respective non-semantically-meaningful variable in the computer program is replaced with the respective semantically-meaningful variable based at least in part on receipt of the respective semantically-meaningful variable from the pre-trained language model. It will be recognized that step 208 shown in FIG. 2 may include step 306. For example, each instance of the non-semantically-meaningful variable in the computer program may be replaced with the respective semantically-meaningful variable. In accordance with this example, each instance of the respective semantically-meaningful variable may be replaced in real-time (e.g., on-the-fly) upon receipt of the respective semantically-meaningful variable from the pre-trained language model. In an example implementation, the replacement logic 616 replaces the non-semantically-meaningful variable in the computer program 638 is replaced with the respective semantically-meaningful variable 632 based at least in part on receipt of the respective semantically-meaningful variable 632 from the pre-trained language model 620.

In another example embodiment, the method of flowchart 200 further includes one or more of the steps shown in flowchart 400 of FIG. 4. As shown in FIG. 4, the method of flowchart 400 begins at step 402. In step 402, rankings are assigned to respective possible computer programs that have a same functionality based at least in part on readability of the respective possible computer programs. The possible computer programs include the computer program. The same functionality is the functionality that is configured to generate the sample output(s) from the respective sample input(s). The readability of the possible computer programs may not take into consideration the ordered rules that are included in the guarded context-free grammar that is described above with reference to step 206. For instance, by not taking into consideration the ordered rules that are included in the guarded context-free grammar to determine the readability of the possible computer programs, determination of the rankings may consume less time and/or resources. Accordingly, the rankings may be determined more efficiently. The readability of each possible computer program may be determined using a machine learning technique and/or a rules-based technique.

In an example implementation, the ranking logic 622 assigns the rankings to the respective possible computer programs. In an aspect of this implementation, the ranking logic 622 identifies the possible computer programs to include the updated computer program 642 and other possible computer program(s) 634, all of which are configured to generate the sample output(s) 628 from (e.g., based on) the sample input(s) 626. In accordance with this aspect, the ranking logic 622 analyzes the updated computer program 642 and the other possible computer program(s) 634 to determine readability of each possible computer program. In further accordance with this aspect, the ranking logic 622 assigns the respective ranking to each possible computer program based on the readability of the respective possible computer program that is determined by the analysis. For instance, a relatively higher readability for a possible computer program may result in a relatively higher ranking of the respective possible computer program. A relatively lower readability for a possible computer program may result in a relatively lower ranking of the respective possible computer program. The ranking logic 622 may generate ranking information 644 to indicate the rankings that are assigned to the respective possible computer programs.

At step 404, the computer program is selected from the possible computer programs based at least in part on the ranking of the computer program being no less than (e.g., being greater than) the ranking of each other possible computer program that is capable of producing an expected result. The computer program may be selected from the possible computer programs further based at least in part on the computer program being capable of producing the expected result, though the example embodiments are not limited in this respect. In an example implementation, the selection logic 624 selects the updated computer program 642 from the possible computer programs based at least in part on the ranking of the updated computer program 642 being no less than (e.g., being greater than) the ranking of each other possible computer program that is capable of producing an expected result. The selection logic 624 may analyze the possible computer programs to determine whether each possible computer program is capable of producing an expected result. For example, the selection logic 624 may apply each possible computer program against the sample input(s) 626 (or portion thereof) to determine whether the respective possible computer program produces the corresponding sample output(s) 628 (or portion thereof). In another example, the selection logic 624 may apply each possible computer program against unlabeled input(s) to determine whether expected outputs are produced based on a probability analysis. The selection logic 624 may generate selection information 652 to indicate that the computer program is selected. For instance, the display logic 642 may perform any one or more of its operations based on the selection information 652 indicating that the computer program is selected.

In yet another example embodiment, the method of flowchart 200 includes one or more of the steps shown in flowchart 500 of FIG. 5. As shown in FIG. 5, the method of flowchart 500 begins at step 502. In step 502, a significant input is identified from multiple inputs of the computer program. The significant input does not have a corresponding ground truth output and does not have a corresponding output to which a confidence, which is less than or equal to a confidence threshold, is assigned. In an example implementation, the intent logic 612 identifies the significant input. The intent logic 612 may generate a ground truth request 646 to request the ground truth output corresponding to the significant input. The ground truth request 646 may includes the significant input or an indication thereof. In accordance with this implementation, the ground truth output is an output that is received from the user from whom the sample input(s) 626 and the sample output(s) 628 are received.

At step 504, a user interface element is caused to be displayed to the user from whom the sample input(s) and the respective sample output(s) are received based at least in part on the significant input being identified. The user interface is configured to request the ground truth output that corresponds to the significant input from the user. In an example implementation, the display logic 618 causes the user interface element to be displayed to the user from whom the sample input(s) 626 and the respective sample output(s) 628 are received based at least in part on the significant input being identified. For instance, the display logic 618 may generate a display instruction 648 that instructs a display, which may be included in the computing system 600 or external to the computing system 600, to display the user interface. The display instruction 648 may include the significant input or the indication thereof from the ground truth request 646. In accordance with this implementation, the user interface is configured to request the ground truth output 650 that corresponds to the significant input from the user.

At step 506, the ground truth output that corresponds to the significant input is received from the user. In an example implementation, the intent logic 612 receives the ground truth output 650 that corresponds to the significant input from the user.

At step 508, a set of possible computer programs from which the computer program is to be selected is identified based at least in part on each possible computer program in the set having the functionality further configured to generate the ground truth output from the significant input. Accordingly, each of the possible computer programs in the set is capable of generating the sample output(s) from the respective sample input(s) and is further capable of generating the ground truth output from the significant input. It will be recognized that step 206 shown in FIG. 2 may include step 508. In an example implementation, the program generation logic 614 identifies a set of possible computer programs from which the computer program 638 is to be selected based at least in part on each possible computer program in the set having the functionality further configured to generate the ground truth output 650 from the significant input. For instance, the intent logic 612 may include the ground truth output 650 or an indication thereof in the intent information 636, and the program generation logic 614 may analyze the intent information 636 to identify the ground truth output 650 or the indication thereof. The program generation logic 614 may analyze the significant input and the ground truth output 650 to determine the possible computer programs to be included in the set.

It will be recognized that the computing system 600 may not include one or more of the semantic idiomatic program synthesis logic 608, the intent logic 612, the program generation logic 614, the replacement logic 616, the display logic 618, the pre-trained language model 620, the ranking logic 622, and/or the selection logic 624. Furthermore, the computing system 600 may include components in addition to or in lieu of the semantic idiomatic program synthesis logic 608, the intent logic 612, the program generation logic 614, the replacement logic 616, the display logic 618, the pre-trained language model 620, the ranking logic 622, and/or the selection logic 624.

The viability of the semantic idiomatic program synthesis logic 608 may depend on any of a variety of factors. One example of such a factor is the domain-specific language, which may define the search space of computer programs. Another example of such a factor is the ranking functionality of the ranking logic 622, which may pick one of the computer programs that are consistent with the sample input(s) 626 and the sample output(s) 628. Bloating the domain-specific language by including several operators that are potentially redundant may increase the program search space and may increase complexity of the ranking functionality.

The guarded context-free grammar may be capable of addressing both challenges. In a context-free grammar, if we have two production rules *X* → *α* and *X → β* for the same nonterminal *X,* we often write the two rules as *X → α* | *β*, where | is the (non-deterministic) choice operator. Guarded context-free grammars allow a new operator, |> , that introduces an ordering on the various choices. Thus, *X → α* |> *β* informally says to prefer *X* → *α* over *X* → *β*, meaning the branch *β* is explored only if the branch *α* failed to produce a program. By writing the domain-specific language using a guarded context-free grammar, learning may be performed more efficiently, and ranking may be simplified.

Variable names may be inherently about the meaning of the data, which may be challenging to capture in a purely rules-based way. This challenge may be overcome by exploiting a large pre-trained model, for example. The pre-trained model may be capable of semantically understanding data and words.

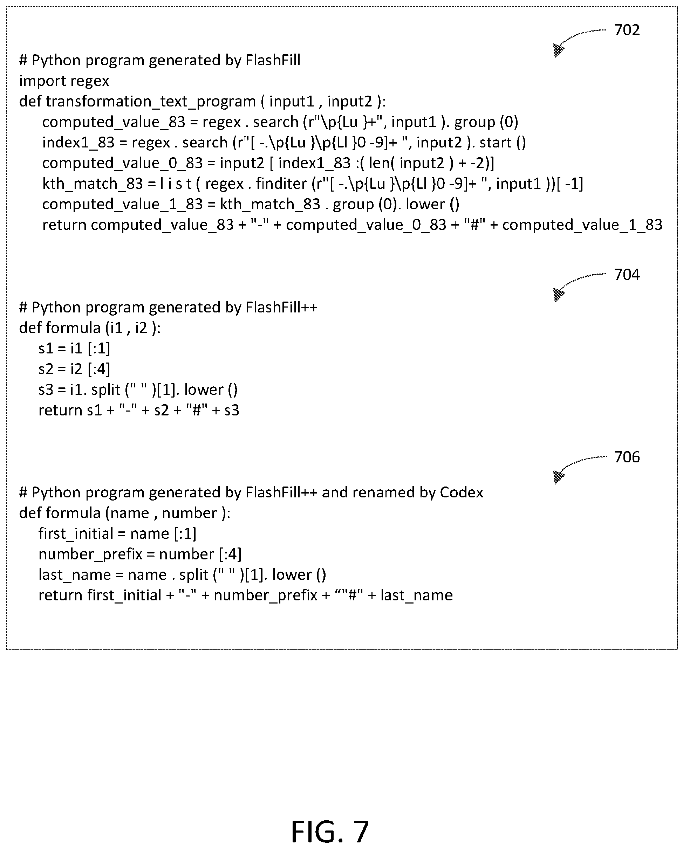

FIG. 7 depicts example computer programs 702, 704, and 706 in accordance with an embodiment. Each of the computer programs is written in the Python^{™} programming language. Each of the computer programs 702, 704, and 706 is configured to perform the following transformation: ("Nancy Freehafer", "623179") → "N-6231#freehafer". The first computer program 702 is synthesized without using idiomatic function(s) and semantically-meaningful variable(s). The second computer program 704 is synthesized using idiomatic function(s), but without using semantically-meaningful variable(s). The third computer program 706 is synthesized using idiomatic function(s) and semantically-meaningful variable(s). For instance, in the third computer program 706, variable names such as s1, s2, and s3 are replaced by the semantically-meaningful variable names first_initial, number_prefix, and last_name.

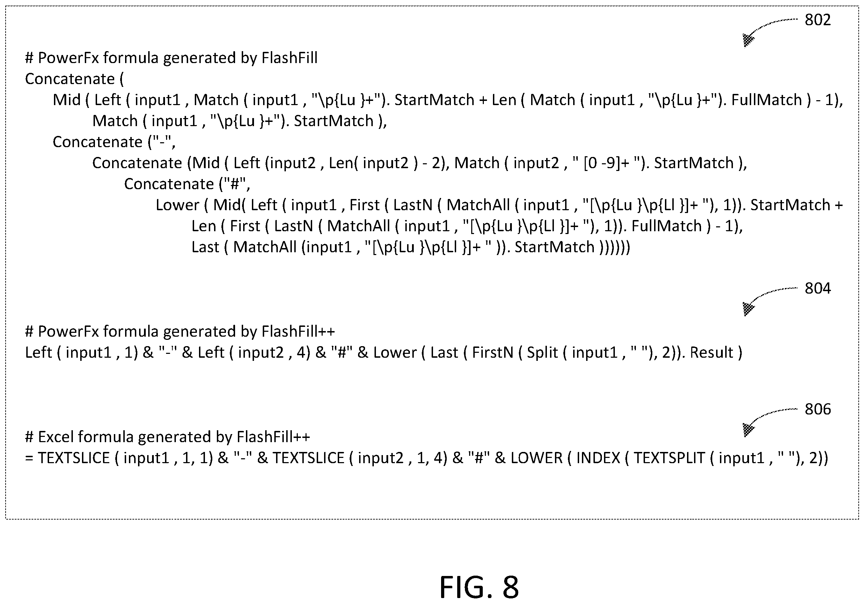

FIG. 8 depicts example computer programs 802, 804, and 806 in accordance with an embodiment. The first and second computer programs 802 and 804 are written in the PowerFx^{™} programming language. The third computer program 806 is written in the Excel^{®} formula language. Each of the computer programs 802, 804, and 806 is configured to perform the same transformation as described above with reference to FIG. 7: ("Nancy Freehafer", "623179") → "N-6231#freehafer". The first computer program 802 is synthesized without using idiomatic function(s) and semantically-meaningful variable(s). The second and third computer programs 804 and 806 are synthesized using idiomatic function(s). As can be seen, the second and third computer programs 804 and 806 are less complex and more easily readable than the first computer program 802.

A guarded context-free grammar *G* may be represented as a 4-tuple (V, Σ, R,*S*), where
(1) V is a set of nonterminals,
(2) Σ is a set of terminal symbols,
(3) R is a set of production rules of the form $V \to {w}_{1} \left|>{w}_{2}\right| > \left.⋯\right| > {w}_{k}$ where each *wᵢ* is a word over V U Σ, and
(4) *S* ∈ V is a start symbol.

Rules in regular context-free grammars are of the form *V* → *w*, where *w* ∈ (V ∪ Σ)*. These rules may be referred to as "simple rules." Rules in guarded context-free grammars can have multiple options on the right-hand side that are ordered. A rule with more than one option is referred to as a "guarded rule."

Consider a simple rule *V* → *w,* which will be called *r* for purposes of illustration. This rule induces a binary relation, denoted by →*ᵣ*, on (V U Σ)* as follows: *w*' → *ᵣ w"* if *w' = w*₁ *V w*₂ and *w" = w*₁*w w*₂*.* A guarded rule *V* → *w*₁ |> *w*₂ |> · · · |> *wₖ* is viewed as a tuple of simple rules, where the *i*-th element of the tuple is *V* → *wᵢ.* We will call *V* → *wᵢ* the *i*-th constituent rule of the original guarded rule. A partial order ≻ may be defined on simple rules by saying *V* → *wᵢ* ≻ *V* → *wⱼ* if both these rules are the *i*-th and *j*-th constituent rules of the same guarded rule and *i < j.* We say the rule *r*₁ is preferred to rule *r*₂ if *r*₁ ≻ *r*₂.

A derivation in a guarded context-free grammar *G* is a sequence of words, written as *S* → *w*₁ → *w*₂→ · · · → *wₙ*, that (a) starts with the start symbol *S*, (b) ends with a word *wn* ∈ Σ*, and (c) each pair of consecutive words is related by some simple rule in the guarded context-free grammar. Note that the simple rule can be a constituent of a guarded rule. The above derivation in *G* is succinctly written as *S* → *_{*G} wₙ.*

A derivation is leftmost if, in every step *w*₁*Vw*2 → *w*₁*w w*₂, it is the case that *w*₁ ∈ Σ*. We can take the preference partial order on simple rules and lexicographically extend it to leftmost derivations. Specifically, we define a partial order on two leftmost derivations: *S* →**_{G} wₙ* ≻ *S* →*_{*G} wₘ* if (a) the two derivation share the first *i* steps (*i* can be 0), (b) if the *i* + 1-th steps in the two derivations are induced respectively by rule *r* and *r',* then *r* ≻ *r'.*

The notion of (leftmost) derivation in a guarded context-free grammar is the same as the notion of a (leftmost) derivation in a context-free grammar that contains all constituent simple rules of every guarded rule as separate simple rules. Guarded context-free grammars allow us to define a partial order on different (leftmost) derivations.

In a first example, consider a guarded context-free grammar *G* := (V, Σ, R,*S*), where V := {*S*,*S*₁,*S*₂}, Σ := {*a,b,c,d,e*}, *S := S*, and R is the set containing *S* → *S*₁,*S*₂, *S*₁→ *a* |> *b, S*₁ → *S*, *S*₂ → *c* |> *d*. Note that R has two simple rules, and two guarded rules for illustrative purposes. We can also write the rules for *S*₁ as *S S*₁ → (*a* |> *b*) | *e.* The strings *ac, ad, bc, bd, ec,* and *ed* have leftmost derivation in *G.*

We now define the key new notion of a derivation in the context *L.* Let *L* ⊂ Σ* be a language (a set of words). Given a guarded context-free grammar *G* and a language *L,* a word *w* is said to have a derivation in *G* in the context *L* if (a) *w* ∈ *L* and there is a leftmost derivation *S* →*_{*G w}*, call it *d,* (b) there is no *w^{'}* ∈ *L* such that there is a leftmost derivation *S* →*_{*G} w',* call it *d',* and *d'* > *d.*

In a second example, consider a guarded context-free grammar *G* from the first example discussed above. Let *L =* {*ad,bc*}. There is a leftmost derivation for *ad* in the context *L,* but there is no leftmost derivation for *bc* in the context *L.* This is because the rule *S*₁→ *a* is preferred over *S*₁→ *b.* Note also that there is a leftmost derivation for *bc* in the context {*bc*}. The rule *S*₁→ *e* is incomparable to the constituent rules *S*₁→ *α* and *S*₁ → *b*. Consequently, both *ec* and *ad* have derivations in the context {*ec,ad,bc*}.

A key aspect of guarded context-free grammars is that the property of accepting a word from a set, say *L,* is invariant to whether we consider acceptance in the context *L.* By considering derivations in the context *L*, guarded context-free grammars provide a mechanism to order the elements they accept from that set *L*.

If *G* is a guarded context-free grammar and *L* is any set of words, then the following are equivalent:
(1) There exists a word *w* ∈ *L* such that there is derivation for *w* in *G.*
(2) There exists a word *w* ∈ *L* such that there is a leftmost derivation for *w* in *G* in the context *L*.

In the programming by example context, *L* will be the set of programs consistent with the given input sample(s) and output sample(s). If we search for programs that have derivations (using a guarded context-free grammar) in context *L*, then we can automatically eliminate "less preferred" programs.

FlashFill++ is an example implementation of semantic idiomatic program synthesis logic 600 shown in FIG. 6 that shares the top level rules that perform conditional statements, case conversion, and string concatenation with the FlashFill program synthesizer. Conditional statements enable if-then-else logic. The condition (i.e., predicate) is one or more conjunctive predicates based on properties of the input string. Case conversion transforms a substring into lower case, uppercase, or proper case form. Concatenation concatenates the two substrings. Although FlashFill can perform some datetime and number operations using text manipulation (such as "01/01/2020" → "2020" or "10.01" → "10"), it is unable to express other sophisticated datetime and number operations. For instance, FlashFill cannot get the date of week from a date (such as "01/01/2020" → "Wednesday"), or round up a number (e.g., "10.49" → "10.5"). This motivates us to add two new rules to support richer datetime (rule formatDate) and number (rule formatNumber) transformations. Learning these rules requires identifying the potential date and number substrings in the input and output and applying fuzzy matching between them to determine which could possibly correspond.

The next major differences are in the substr and pos rules. FlashFill has a single Slice operator that selects a substring defined by its start and end positions, which can be defined either as absolute positions or with the complicated RegPos operator that finds the kth place in the string bounded by the two given regular expressions. While this is expressive enough to cover any desired substring selection and all of the operators in FlashFill++ can technically be expressed in terms of it, in FlashFill++ we chose a wider collection of operators that mimics what developers do in practice (which makes translating these operators to the target languages much easier). In particular, instead of only allowing substrings to be defined as a Slice with their start and end positions, FlashFill++ adds a Split operator to select the kth element in a sequence of repeated delimiters and a MatchFull operator to find the kth match of a regular expression. Additionally, in FlashFill++ the pos rule replaces the operator RegPos (which relies on a pair of regular expressions to identify a position) with a Find of a constant string in the input and a Match/MatchEnd of a regular expression. Although these newly introduced operators may overlap in their expressiveness (potentially increasing synthesis time and potentially lowering ranking effectiveness), we can minimize the effect by leveraging guarded rules to prioritize the search. Our evaluation shows that FlashFill++ is much faster than FlashFill.

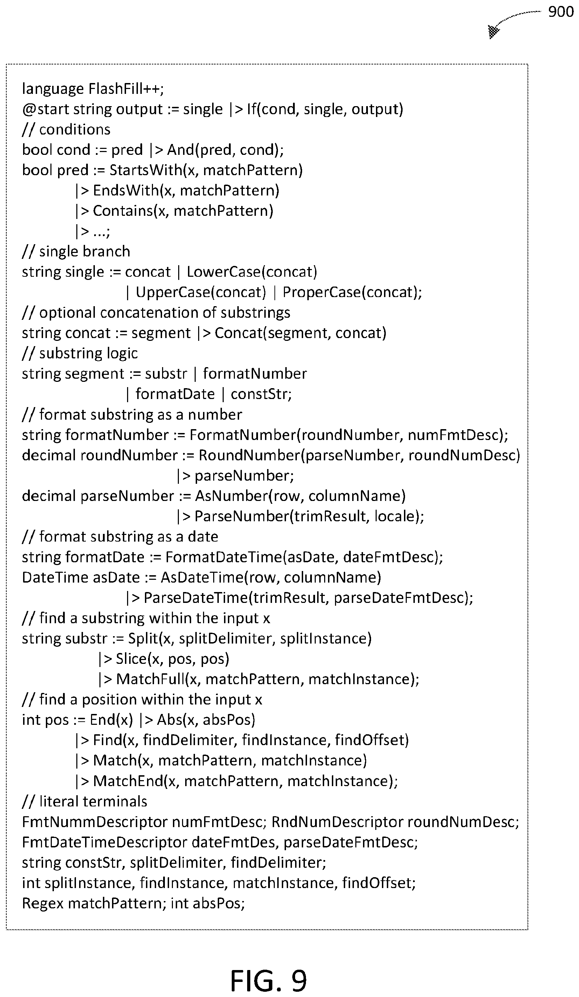

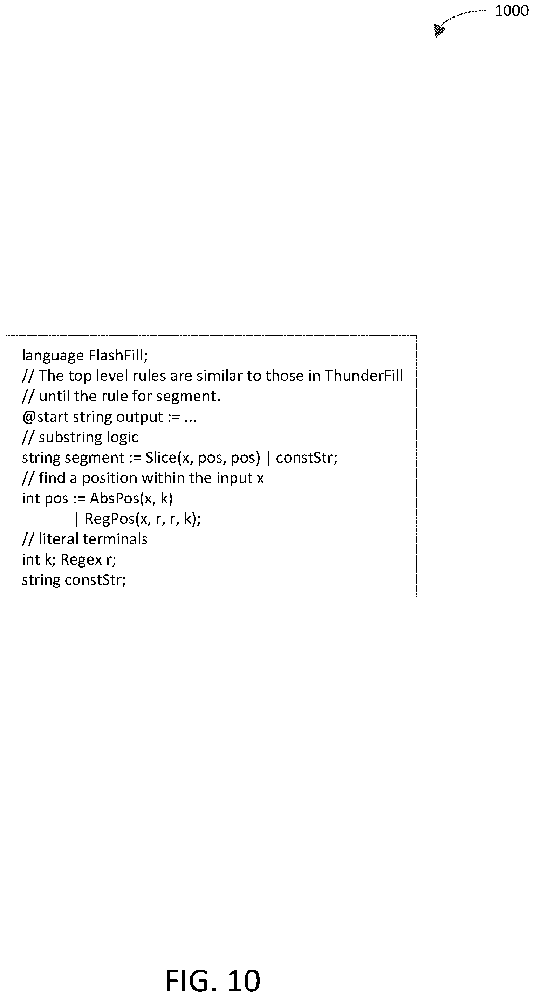

FIG. 9 shows example domain-specific language 900 for the FlashFill++ program synthesizer in accordance with an embodiment. In the domain-specific language for Thunderfill, | choices are unguarded, and |> choices are guarded. FIG. 10 shows example domain-specific language 1000 for the FlashFill program synthesizer in accordance with an embodiment. FIGS. 9 and 10 are discussed together below to facilitate the explanation of the differences between the domain-specific language for FlashFill++ and the domain-specific language for FlashFill. In FlashFill, code generation was an after-thought. That is, the main focus was on efficacy of the learning and ranking process (hence the minimal DSL); code generation was added as a post-processing step. Because there is a gap between the FlashFill's DSL and the target language (e.g., Python^{™}), it may be challenging to translate a program in FlashFill's DSL to natural programs in the target language. For instance, although RegPos is a concise way to find a position in a string, directly translating it to the target language may result in a verbose fragment of code. Heuristics may be implemented to translate special cases (such as when a regex is a constant string, or when one of the two regexes is empty) to simplify the generated code. However, in general the translation may be unnecessarily complicated and still may not represent what developers use in practice.

In contrast, the design of the FlashFill++ DSL was guided by the need for readable code generation. Consequently, most operators in the DSL are those that have direct analogous operators in the target language. This makes the process of translation to the target fairly straightforward, and also guarantees that the translation is natural to some extent. FIGS. 7-8 show examples of the more readable code that can be generated by FlashFill++.

Codex is an example implementation of the pre-trained language model 620 shown in FIG. 6. Similar to other symbolic code generators, FlashFill++ may generate code that contains generic variable names (such as i1, s1) because it may not derive the semantics from the examples. To make the code even more readable, we use Codex, a large pre-trained language model fine-tuned on code, to rename generic variable names in FlashFill++'s programs to those that are relevant to the task (such as name or first_initial). For example, the following prompt (a.k.a. "query") may be used:

```
      ##### Rename variables in the below function
      . . . 2 samples of renaming tasks of the form
      . . . (I/O examples, FlashFill++ prog.) -> renamed prog.
      ### Original Python
      . . . I/O examples ...
      . . . FlashFill++ program (generic variable names) ...
      ### Renamed Python
```

Each renaming task maps the pair of (I/O examples, FlashFill++ program) to the desired renamed program. The prompt includes two static samples of such tasks, followed by the "question", which is the pair (I/O examples, FlashFill++ program) that are to be renamed. Given this prompt, Codex responds with the renamed program that it learns from the task samples. This capability is called few-shot learning.

In some cases, Codex may respond with a program that is semantically different from FlashFill++'s program in the question. This is understandable because Codex does not have any guarantees on the output; it repeatedly samples the vocabulary based on what it has seen so far. To preserve the program semantics, the computer program can be frozen, leaving only variables as holes for Codex to complete. Since Codex cannot perform infilling (i.e., filling in the blanks surrounded by texts), multiple calls can be made to Codex, each time to rename a variable in left-to-right order. A stopword may be chosen so that Codex stops as soon as it completes the variable. Once a variable is renamed where it is defined, all of instances of the variable that appear later in the program may be renamed. In the next iteration, the frozen text may be appended to the prompt after the most recently renamed variable, until the next not-yet-renamed variable is encountered. A new call may then be made to Codex to rename the new variable.

The process continues until all variables are renamed.

The renaming process performed by Codex is similar to constrained decoding, where the goal is to force language models to abide to some external constraints. Two static samples are used in the prompt for illustrative purposes. Although prompt-engineering may be performed to select samples that are similar to the question, static samples may be sufficient.

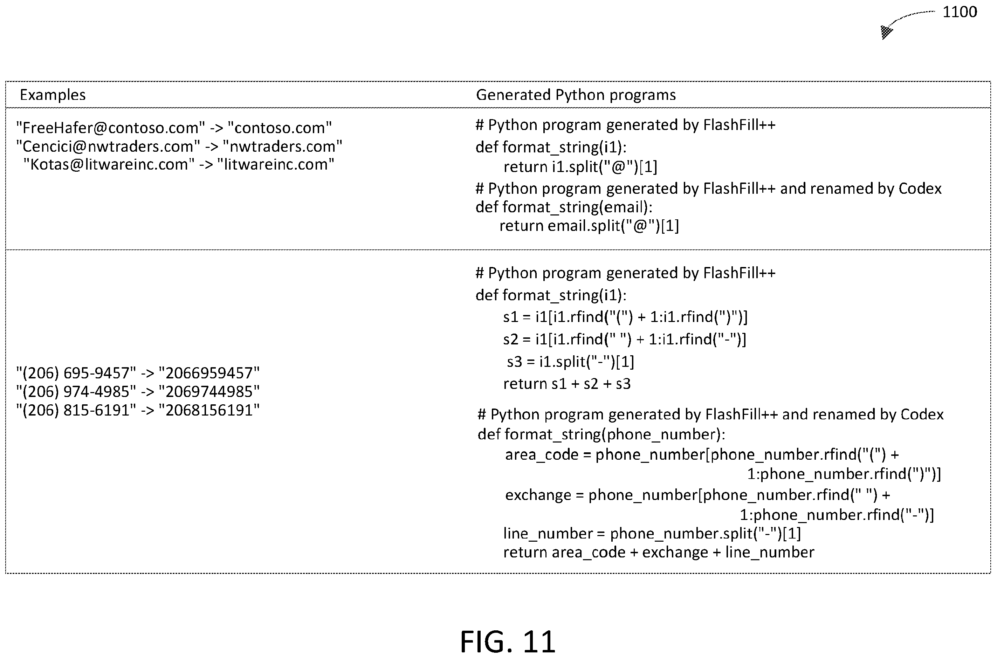

FIG. 11 shows a table 1100 in which example variables have been renamed in accordance with an embodiment. For instance, Codex may be used to rename generic variables generated by FlashFill++ into those that are relevant to the task.

Input samples and output samples (a.k.a. "input-output samples" or "input-output examples") provide an incomplete specification for a computer program. Consequently, given a few input-output examples, each of multiple computer programs in the DSL may be capable of transforming the given inputs to the corresponding outputs. A ranking function is used to determine which of the computer programs is to be returned to the user.

Given a guarded context-free grammar *G* := (V, Σ, R,*S*) of the DSL, a ranking function *f* is a mapping from the words over Σ to a totally ordered domain (*D,* ≺); thus, *f :* Σ_{*} → *D.* A word w is preferred over *w'* if *f* (*w*) ≺ *f* (*w^{'}*).

The semantic idiomatic program synthesis logic 606 may use a ranking function to select one out of many candidate programs that may be consistent with the input-output examples. Typically, ranking functions have been defined compositionally; that is, *f* (*w*₁*w*₂) *= g*(*f* (*w*₁), *f* (*w*₂)), where *g* is some fixed function *g : D* × *D* ↦ *D.*

The domain *D* may be a feature space. The function *f* may extract features of a program by taking features of subprograms and combining them using the aggregation function *g.* Several choices are to be made when designing a ranking function: the set of features that help define *D*, the aggregation function *g,* and the ordering ≺ on the domain. It can take many man-months to converge on a good ranking function. The ranking function of FlashFill has been fine-tuned over a long period of time, which has been crucial for its success.

The FlashFill++ programming by example system solves the ranking challenge in two ways: (1) using guarded context-free grammars as the grammar for the domain-specific language, and (2) using a holistic ranking function.

First, the use of a guarded context-free grammar as the underlying grammar for the domain-specific language helps substantially by encoding some high-level ranking preferences. For example, if we have a guarded rule, say *S*₁ → *w*₁|> *w*₂, then this implicitly encodes the preference for any subprogram generated by *w*₁ over any subprogram generated by *w*₂. Consequently, the ranking function need not necessarily compare a subprogram generated by *w*₁ with a subprogram generated by *w*₂. The ranking function can thus be much simpler. The following theorem formally states this property.

Let *G* be an unambiguous guarded context-free grammar. Let *S*₁ and *S*₂ be two strings such that if *S*₁ is generated as *X* → *w*₁ →_{** S*1}, then *S*₂ is generated as *X* → *w*₂ →_{* *S*2}, and *X* → *w*₁≻ *X* → *w*₂. Then, for any substrings *S*₁, *S*ᵣ, S*'*ᵣ, the strings *S*₁, *S*₁, *S*ᵣ and *S*₁, *S*₂, *S*'ᵣ cannot both have derivations in context *L,* for any *L.*

Second, the ranking function for FlashFill++ is not built directly from subprograms. Instead, it is a simple average of the scores of the leaf (literal and variable) nodes plus a penalty computed for each operator (not considering its arguments or context) and literal value. This simplifies writing the ranking function as how to combine the values does not have to be considered carefully, and each piece of the domain-specific language is ranked independently.

The Codex ranking function may fail a monotonicity criterion that requires the ranking function *f* to satisfy the property: if *f* (*w*) *> f* (*w'*), then *f* (*H* (*w*)) *> f* (*H* (*w'*)) must hold for all domain-specific language operators *H* in order to guarantee that the true top-ranked program will get returned. In practice, it is sufficient to pad k when computing the top-k programs (e.g., request the top-5 when you really only care about the top-2 and the result will usually contain the true top-2 programs). In practice, monotonic ranking functions may be undesirable because they do not allow for the rank of a subprogram to depend strongly on the context in which the subprogram appears.

Consider a scenario in which a user is working with a table with many rows, and the user wants to derive a new column from the existing data. If the user does not know how to write a program to do so, the user may provide an example by filling the first cell of the empty new column. At this point, semantic idiomatic program synthesis logic (e.g., the semantic idiomatic program synthesis logic 606) may synthesize a computer program from the one input-output example. This computer program can be run on all the rows to fill the values in the new column. The user can then verify that the values populated in the new column are correct. For example, the user may manually review all the rows to find one that is incorrect. In another example, the semantic idiomatic program synthesis logic may cause the generated readable code to be shown to the user, but this may assume that the user can understand the code and that the user understands the data well enough to notice edge cases potentially missed by the computer program. To help the user, the concept of significant inputs may be employed. Information-theoretic principles may be used to define a significant input, which may be an input about whose output we are most uncertain. Let *Pr* : Σ* ↦ [0, 1] be a probability distribution over the set of valid programs. A internal state of the semantic idiomatic program synthesis logic can be modeled as such a probability distribution. The probability distribution represents the semantic idiomatic program synthesis logic's current belief of what the user wants, updated whenever the logic processes a new input-output (*i,o*) example. Given a set of input-examples *E* = {(*i*₁,*o*1), (*i*₂,o2), . . .}, the notation *Pr* (. | *E*) represents the logic's state after processing *E;* in particular, *Pr* (*p* | *E*) is the probability of program *p* being the correct program after processing *E.*

Assume the synthesizer has processed the set *E* of input-output examples. Given an input *i*, let *Prᵢ*(*.* | *E*) denote a probability distribution over the output space defined as: *Prᵢ*(*o* | *E*) *=* Σ *Pr* (*p* | *E*) $p ∈ {{Σ}^{∗}}_{, p} \left(i\right) = o$

The entropy *En*(*Pr*) of a probability distribution *Pr* over domain *D* is defined as Σ_{*d*∈}*_{D} -Pr* (*d*) log(*Pr* (*d*)). An input *i* from a set Inputs is a significant input in a synthesizer state *Pr* (. | *E*) if *i* = argmax_{*i*∈Inputs}*En*(*Prᵢ*(. | *E*)), where *Prᵢ*(. | *E*) is defined as set forth above.

Entropy is a measure of uncertainty; higher values indicate more uncertainty. Intuitively, a significant input may be the input about whose output there is greatest uncertainty, given the knowledge of the input-output examples *E.*

Let *Pr* (. | E) model the state of the semantic idiomatic program synthesis logic after the logic processes the set *E* of input-output examples. Let *i* ∈ Inputs be a significant input in the state *Pr* (. | *E*). Then, *En*(*Pr* (. |*E*, (*i, .*))) ≤ *En*(*Pr* (. | *E,* (*j,* .))) for all *j* ∈ Inputs, where *Pr* (. | *E,* (*j,* .)) is a probability distribution over programs defined as *Pr* (*p* | *E,* (*j,* .)) =∑_{*o*∈Outputs} *Pr* (*p* | *E,* (*j,o*))*.* The theorem above informally says that a program synthesizer will benefit the most (in terms of getting into a least entropy state) from the output for the input it is least certain about (the significant input). Note that this is a greedy algorithm for converging to the correct program. It may not be optimal because once the user provides the output for the (significant) input, the posterior probabilities change in unknown ways. Finding the globally smallest set of inputs to converge to the correct program can be shown to be NP-hard by a reduction from set cover. The greedy approach, based on entropy, works well in practice.

The probability distribution in the formalism may not exist explicitly in the internal state of most program synthesizers; however, the program synthesizers may generate many candidate programs and also have a ranking function that can order these candidates. This ranked list of candidates may be mapped into a probabilistic belief state. The set of candidates is only a sample of all valid programs given *E,* but that is sufficient for our purposes of estimating *Pr* (. | *E).*

In an example implementation, thresholding may be used to present only those significant inputs to the user whose uncertainty (entropy) measure is above a certain threshold. Not presenting significant inputs whose entropy is below the threshold to the user may be a way for the program synthesizer to indicate to the user that the program synthesizer is relatively confident about the correctness of the learned program.

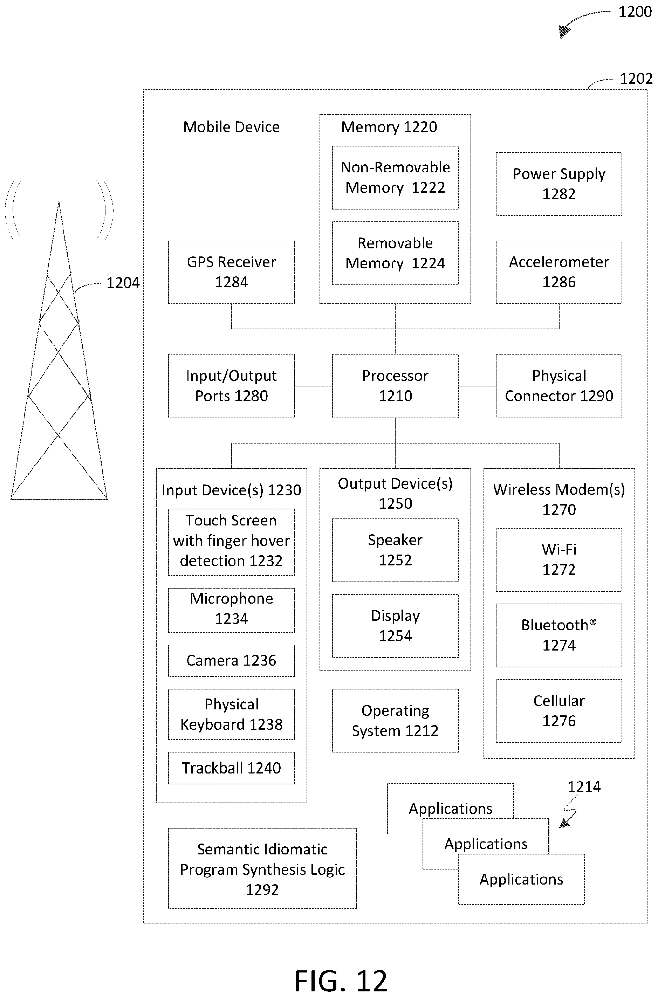

FIG. 12 is a system diagram of an exemplary mobile device 1200 including a variety of optional hardware and software components, shown generally as 1202. Any components 1202 in the mobile device may communicate with any other component, though not all connections are shown, for ease of illustration. The mobile device 1200 may be any of a variety of computing devices (e.g., cell phone, smartphone, handheld computer, Personal Digital Assistant (PDA), etc.) and may allow wireless two-way communications with one or more mobile communications networks 1204, such as a cellular or satellite network, or with a local area or wide area network.

The mobile device 1200 may include a processor 1210 (e.g., signal processor, microprocessor, ASIC, or other control and processing logic circuitry) for performing such tasks as signal coding, data processing, input/output processing, power control, and/or other functions. An operating system 1212 may control the allocation and usage of the components 1202 and support for one or more applications 1214 (a.k.a. application programs). The applications 1214 may include common mobile computing applications (e.g., email applications, calendars, contact managers, web browsers, messaging applications) and any other computing applications (e.g., word processing applications, mapping applications, media player applications).

The mobile device 1200 may include memory 1220. The memory 1220 may include non-removable memory 1222 and/or removable memory 1224. The non-removable memory 1222 may include RAM, ROM, flash memory, a hard disk, or other well-known memory storage technologies. The removable memory 1224 may include flash memory or a Subscriber Identity Module (SIM) card, which is well known in GSM communication systems, or other well-known memory storage technologies, such as "smart cards." The memory 1220 may store data and/or code for running the operating system 1212 and the applications 1214. Example data may include web pages, text, images, sound files, video data, or other data sets to be sent to and/or received from one or more network servers or other devices via one or more wired or wireless networks. Memory 1220 may store a subscriber identifier, such as an International Mobile Subscriber Identity (IMSI), and an equipment identifier, such as an International Mobile Equipment Identifier (IMEI). Such identifiers may be transmitted to a network server to identify users and equipment.

The mobile device 1200 may support one or more input devices 1230, such as a touch screen 1232, microphone 1234, camera 1236, physical keyboard 1238 and/or trackball 1240 and one or more output devices 1250, such as a speaker 1252 and a display 1254. Touch screens, such as the touch screen 1232, may detect input in different ways. For example, capacitive touch screens detect touch input when an object (e.g., a fingertip) distorts or interrupts an electrical current running across the surface. As another example, touch screens may use optical sensors to detect touch input when beams from the optical sensors are interrupted. Physical contact with the surface of the screen is not necessary for input to be detected by some touch screens. For example, the touch screen 1232 may support a finger hover detection using capacitive sensing, as is well understood in the art. Other detection techniques may be used, including but not limited to camera-based detection and ultrasonic-based detection. To implement a finger hover, a user's finger is typically within a predetermined spaced distance above the touch screen, such as between 0.1 to 0.25 inches, or between 0.25 inches and 0.5 inches, or between 0.5 inches and 0.75 inches, or between 0.75 inches and 1 inch, or between 1 inch and 1.5 inches, etc.

The mobile device 1200 may include semantic idiomatic program synthesis logic 1292. The semantic idiomatic program synthesis logic 1292 is configured to synthesize a computer program to include idiomatic function(s) and semantically-meaningful variable(s) using programming by example in accordance with any one or more of the techniques described herein.

Other possible output devices (not shown) may include piezoelectric or other haptic output devices. Some devices may serve more than one input/output function. For example, touch screen 1232 and display 1254 may be combined in a single input/output device. The input devices 1230 may include a Natural User Interface (NUI). An NUI is any interface technology that enables a user to interact with a device in a "natural" manner, free from artificial constraints imposed by input devices such as mice, keyboards, remote controls, and the like. Examples of NUI methods include those relying on speech recognition, touch and stylus recognition, gesture recognition both on screen and adjacent to the screen, air gestures, head and eye tracking, voice and speech, vision, touch, gestures, and machine intelligence. Other examples of a NUI include motion gesture detection using accelerometers/gyroscopes, facial recognition, 3D displays, head, eye, and gaze tracking, immersive augmented reality and virtual reality systems, all of which provide a more natural interface, as well as technologies for sensing brain activity using electric field sensing electrodes (EEG and related methods). Thus, in one specific example, the operating system 1212 or applications 1214 may include speech-recognition software as part of a voice control interface that allows a user to operate the mobile device 1200 via voice commands. Furthermore, the mobile device 1200 may include input devices and software that allows for user interaction via a user's spatial gestures, such as detecting and interpreting gestures to provide input to a gaming application.

Wireless modem(s) 1270 may be coupled to antenna(s) (not shown) and may support two-way communications between the processor 1210 and external devices, as is well understood in the art. The modem(s) 1270 are shown generically and may include a cellular modem 1276 for communicating with the mobile communication network 1204 and/or other radio-based modems (e.g., Bluetooth^{®} 1274 and/or Wi-Fi 1272). At least one of the wireless modem(s) 1270 is typically configured for communication with one or more cellular networks, such as a GSM network for data and voice communications within a single cellular network, between cellular networks, or between the mobile device and a public switched telephone network (PSTN).

The mobile device may further include at least one input/output port 1280, a power supply 1282, a satellite navigation system receiver 1284, such as a Global Positioning System (GPS) receiver, an accelerometer 1286, and/or a physical connector 1290, which may be a USB port, IEEE 1394 (FireWire) port, and/or RS-232 port. The illustrated components 1202 are not required or all-inclusive, as any components may be deleted and other components may be added as would be recognized by one skilled in the art.

Although the operations of some of the disclosed methods are described in a particular, sequential order for convenient presentation, it should be understood that this manner of description encompasses rearrangement, unless a particular ordering is required by specific language set forth herein. For example, operations described sequentially may in some cases be rearranged or performed concurrently. Moreover, for the sake of simplicity, the attached figures may not show the various ways in which the disclosed methods may be used in conjunction with other methods.

Any one or more of the semantic idiomatic program synthesis logic 108, the semantic idiomatic program synthesis logic 608, the intent logic 612, the program generation logic 614, the replacement logic 616, the display logic 618, the pre-trained language model 620, the ranking logic 622, the selection logic 624, the semantic idiomatic program synthesis logic 1292, flowchart 200, flowchart 300, flowchart 400, and/or flowchart 500 may be implemented in hardware, software, firmware, or any combination thereof.

For example, any one or more of the semantic idiomatic program synthesis logic 108, the semantic idiomatic program synthesis logic 608, the intent logic 612, the program generation logic 614, the replacement logic 616, the display logic 618, the pre-trained language model 620, the ranking logic 622, the selection logic 624, the semantic idiomatic program synthesis logic 1292, flowchart 200, flowchart 300, flowchart 400, and/or flowchart 500 may be implemented, at least in part, as computer program code configured to be executed in one or more processors. In another example, any one or more of the semantic idiomatic program synthesis logic 108, the semantic idiomatic program synthesis logic 608, the intent logic 612, the program generation logic 614, the replacement logic 616, the display logic 618, the pre-trained language model 620, the ranking logic 622, the selection logic 624, the semantic idiomatic program synthesis logic 1292, flowchart 200, flowchart 300, flowchart 400, and/or flowchart 500 may be implemented, at least in part, as hardware logic/electrical circuitry. Such hardware logic/electrical circuitry may include one or more hardware logic components. Examples of a hardware logic component include but are not limited to a field-programmable gate array (FPGA), an application-specific integrated circuit (ASIC), an application-specific standard product (ASSP), a system-on-a-chip system (SoC), a complex programmable logic device (CPLD), etc. For instance, a SoC may include an integrated circuit chip that includes one or more of a processor (e.g., a microcontroller, microprocessor, digital signal processor (DSP), etc.), memory, one or more communication interfaces, and/or further circuits and/or embedded firmware to perform its functions.

### III. Example Computer System

FIG. 9 depicts an example computer 900 in which embodiments may be implemented. Any one or more of the user devices 102A-102M and/or any one or more of the servers 106A-106N shown in FIG. 1 and/or computing system 600 shown in FIG. 6 may be implemented using computer 900, including one or more features of computer 900 and/or alternative features. Computer 900 may be a general-purpose computing device in the form of a conventional personal computer, a mobile computer, or a workstation, for example, or computer 900 may be a special purpose computing device. The description of computer 900 provided herein is provided for purposes of illustration, and is not intended to be limiting. Embodiments may be implemented in further types of computer systems, as would be known to persons skilled in the relevant art(s).

As shown in FIG. 9, computer 900 includes a processing unit 902, a system memory 904, and a bus 906 that couples various system components including system memory 904 to processing unit 902. Bus 906 represents one or more of any of several types of bus structures, including a memory bus or memory controller, a peripheral bus, an accelerated graphics port, and a processor or local bus using any of a variety of bus architectures. System memory 904 includes read only memory (ROM) 908 and random access memory (RAM) 910. A basic input/output system 912 (BIOS) is stored in ROM 908.

Computer 900 also has one or more of the following drives: a hard disk drive 914 for reading from and writing to a hard disk, a magnetic disk drive 916 for reading from or writing to a removable magnetic disk 918, and an optical disk drive 920 for reading from or writing to a removable optical disk 922 such as a CD ROM, DVD ROM, or other optical media. Hard disk drive 914, magnetic disk drive 916, and optical disk drive 920 are connected to bus 906 by a hard disk drive interface 924, a magnetic disk drive interface 926, and an optical drive interface 928, respectively. The drives and their associated computer-readable storage media provide nonvolatile storage of computer-readable instructions, data structures, program modules and other data for the computer. Although a hard disk, a removable magnetic disk and a removable optical disk are described, other types of computer-readable storage media can be used to store data, such as flash memory cards, digital video disks, random access memories (RAMs), read only memories (ROM), and the like.

A number of program modules may be stored on the hard disk, magnetic disk, optical disk, ROM, or RAM. These programs include an operating system 930, one or more application programs 932, other program modules 934, and program data 936. Application programs 932 or program modules 934 may include, for example, computer program logic for implementing any one or more of (e.g., at least a portion of) the semantic idiomatic program synthesis logic 108, the semantic idiomatic program synthesis logic 608, the intent logic 612, the program generation logic 614, the replacement logic 616, the display logic 618, the pre-trained language model 620, the ranking logic 622, the selection logic 624, the semantic idiomatic program synthesis logic 1292, flowchart 200 (including any step of flowchart 200), flowchart 300 (including any step of flowchart 300), flowchart 400 (including any step of flowchart 400), and/or flowchart 500 (including any step of flowchart 500), as described herein.

A user may enter commands and information into the computer 900 through input devices such as keyboard 938 and pointing device 940. Other input devices (not shown) may include a microphone, joystick, game pad, satellite dish, scanner, touch screen, camera, accelerometer, gyroscope, or the like. These and other input devices are often connected to the processing unit 902 through a serial port interface 942 that is coupled to bus 906, but may be connected by other interfaces, such as a parallel port, game port, or a universal serial bus (USB).

A display device 944 (e.g., a monitor) is also connected to bus 906 via an interface, such as a video adapter 946. In addition to display device 944, computer 900 may include other peripheral output devices (not shown) such as speakers and printers.

Computer 900 is connected to a network 948 (e.g., the Internet) through a network interface or adapter 950, a modem 952, or other means for establishing communications over the network. Modem 952, which may be internal or external, is connected to bus 906 via serial port interface 942.

As used herein, the terms "computer program medium" and "computer-readable storage medium" are used to generally refer to media (e.g., non-transitory media) such as the hard disk associated with hard disk drive 914, removable magnetic disk 918, removable optical disk 922, as well as other media such as flash memory cards, digital video disks, random access memories (RAMs), read only memories (ROM), and the like. A computer-readable storage medium is not a signal, such as a carrier signal or a propagating signal. For instance, a computer-readable storage medium may not include a signal. Accordingly, a computer-readable storage medium does not constitute a signal per se. Such computer-readable storage media are distinguished from and non-overlapping with communication media (do not include communication media). Communication media embodies computer-readable instructions, data structures, program modules or other data in a modulated data signal such as a carrier wave. The term "modulated data signal" means a signal that has one or more of its characteristics set or changed in such a manner as to encode information in the signal. By way of example, and not limitation, communication media includes wireless media such as acoustic, RF, infrared and other wireless media, as well as wired media. Example embodiments are also directed to such communication media.

As noted above, computer programs and modules (including application programs 932 and other program modules 934) may be stored on the hard disk, magnetic disk, optical disk, ROM, or RAM. Such computer programs may also be received via network interface 950 or serial port interface 942. Such computer programs, when executed or loaded by an application, enable computer 900 to implement features of embodiments discussed herein. Accordingly, such computer programs represent controllers of the computer 900.

Example embodiments are also directed to computer program products comprising software (e.g., computer-readable instructions) stored on any computer-useable medium. Such software, when executed in one or more data processing devices, causes data processing device(s) to operate as described herein. Embodiments may employ any computer-useable or computer-readable medium, known now or in the future. Examples of computer-readable mediums include, but are not limited to storage devices such as RAM, hard drives, floppy disks, CD ROMs, DVD ROMs, zip disks, tapes, magnetic storage devices, optical storage devices, MEMS-based storage devices, nanotechnology-based storage devices, and the like.

It will be recognized that the disclosed technologies are not limited to any particular computer or type of hardware. Certain details of suitable computers and hardware are well known and need not be set forth in detail in this disclosure.

## Claims

1. A system (106A, 600, 1200) to synthesize a computer program to include one or more idiomatic functions and at least one semantically-meaningful variable therein using programming by example, the system comprising:
a memory (1220); and
a processing system (902, 1210) coupled to the memory, the processing system configured to:
receive one or more sample inputs (626) and one or more respective sample outputs (628) from a user;
identify an input from the sample inputs not having a corresponding ground truth output and having a corresponding sample output to which a measure of entropy is assigned that is above a threshold as a significant input, wherein entropy is a measure of uncertainty;
display the identified significant input to the user;
receive, from the user, a ground truth output (550) that corresponds to the significant input;
synthesize the computer program (638) to include one or more idiomatic functions (640) by configuring the one or more idiomatic functions to have a functionality that is configured to generate the one or more sample outputs from the one or more respective sample inputs and to conform to a convention of a target domain-specific language, which is associated with a textual representation of the computer program that is to be displayed to the user, wherein synthesizing the computer program to include the one or more idiomatic functions comprises identifying a set of possible computer programs from which the computer program is to be selected based at least in part on each possible computer program in the set being further configured to generate the ground truth output from the significant input;
replace at least one non-semantically-meaningful variable that is included among the one or more idiomatic functions with at least one respective semantically-meaningful variable (632), each semantically-meaningful variable having a name that is derived from a vocabulary of a language and that is based at least in part on a context in which the semantically-meaningful variable is used, each non-semantically-meaningful variable having a name that is at least one of not derived from the vocabulary of the language or not based at least in part on the context in which the semantically-meaningful variable is used; and
cause the textual representation of the computer program, including the one or more idiomatic functions and the at least one semantically-meaningful variable therein, to be displayed to the user from whom the one or more sample inputs and the one or more respective sample outputs are received.

2. The system according to claim 1, wherein the processing system is configured to:
from a plurality of possible idiomatic functions all generating the one or more sample outputs from the one or more respective sample inputs, except for the identified significant input, to generate the received ground truth output from the identified significant input, and to conform to a convention of a target domain-specific language, select an idiomatic function of the one or more idiomatic functions by using a guarded context-free grammar G,
wherein the guarded context-free grammar includes a plurality of guarded production rules, each production rule being of the form V -> w₁ |> w₂ |> ... |> wₖ, k>=1, wherein V pertains to a set of nonterminals, w₁,...,wₖ all pertain to a set of terminal symbols, and |> is an operator ordering choices of terminal symbols w₁,...,wₖ for a same nonterminal V, where V -> w₁ is preferred to V -> w₂ if there is a guarded production rule V -> w₁ |> w₂ in G,
wherein the plurality of guarded production rules is configured to generate the plurality of respective possible idiomatic functions, and
wherein the processing system is configured to select the idiomatic function based at least in part on the guarded production rules from which the plurality of possible idiomatic functions has been generated.

3. The system according to any one of claims 1 to 2, wherein the processing system is configured to, for each non-semantically-meaningful variable of the at least one non-semantically-meaningful variable:
query a language model pre-trained on human-written code with a query that includes a portion of the computer program that precedes the respective non-semantically-meaningful variable; and
replace the respective non-semantically-meaningful variable in the computer program with the respective semantically-meaningful variable based at least in part on receipt of the respective semantically-meaningful variable from the pre-trained language model.

4. The system according to any one of claims 1 to 3, wherein the processing system is configured to:
configure at least one of the one or more idiomatic functions to perform the following operations:
extract date-time information, which indicates at least one of a date or a time, from a string;
select a date-time format from a plurality of date-time formats based at least in part on a determination that a sample output of the one or more sample outputs results from application of the selected date-time format to a corresponding sample input of the one or more sample inputs; and
apply the selected date-time format to the date-time information that is extracted from the string.

5. The system according to any one of claims 1 to 4, wherein the processing system is configured to:
configure at least one of the one or more idiomatic functions to perform the following operations:
extract a number from a string;
select a number format from a plurality of number formats based at least in part on a determination that a sample output of the one or more sample outputs results from application of the selected number format to a corresponding sample input of the one or more sample inputs; and
apply the selected number format to the number that is extracted from the string.

6. The system according to any one of claims 1 to 5, wherein the processing system is further configured to:
assign a plurality of rankings to a plurality of respective possible computer programs that have a same functionality based at least in part on readability of the plurality of respective possible computer programs, the plurality of possible computer programs including the computer program, the same functionality being a functionality that is configured to generate the one or more sample outputs from the one or more respective sample inputs; and
select the computer program from the plurality of possible computer programs based at least in part on the ranking of the computer program being no less than the ranking of each other possible computer program.

7. A method of synthesizing a computer program to include one or more idiomatic functions and at least one semantically-meaningful variable therein using programming by example, the method implemented by a computing system, the method comprising:
receiving (202) one or more sample inputs (626) and one or more respective sample outputs (628), from a user;
identifying an input from the sample inputs not having a corresponding ground truth output and having a corresponding sample output to which a measure of entropy is assigned that is above a threshold as a significant input, wherein entropy is a measure of uncertainty;
displaying the identified significant input to the user;
receiving, from the user, a ground truth output (550) that corresponds to the significant input;
synthesizing (206) the computer program (638) to include one or more idiomatic functions (640) by configuring the one or more idiomatic functions to have a functionality that is configured to generate the one or more sample outputs from the one or more respective sample inputs and to conform to a convention of a target domain-specific language, which is associated with a textual representation of the computer program that is to be displayed to the user, wherein synthesizing the computer program to include the one or more idiomatic functions comprises identifying a set of possible computer programs from which the computer program is to be selected based at least in part on each possible computer program in the set being further configured to generate the ground truth output from the significant input;
replacing (208) at least one non-semantically-meaningful variable that is included among the one or more idiomatic functions with at least one respective semantically-meaningful variable (632), each semantically-meaningful variable having a name that is derived from a vocabulary of a language and that is based at least in part on a context in which the semantically-meaningful variable is used, each non-semantically-meaningful variable having a name that is at least one of not derived from the vocabulary of the language or not based at least in part on the context in which the semantically-meaningful variable is used; and
causing (210) the textual representation of the computer program, including the one or more idiomatic functions and the at least one semantically-meaningful variable therein, to be displayed to the user from whom the one or more sample inputs and the one or more respective sample outputs are received.

8. The method according to claim 7, wherein synthesizing the computer program to include the one or more idiomatic functions comprises:
from a plurality of possible idiomatic functions all generating the one or more sample outputs from the one or more respective sample inputs, except for the identified significant input, to generate the received ground truth output from the identified significant input, and to conform to a convention of a target domain-specific language, selecting an idiomatic function of the one or more idiomatic functions by using a guarded context-free grammar G,
wherein the guarded context-free grammar includes a plurality of guarded production rules, each production rule being of the form V -> w₁ |> w₂ |> ... |> wₖ, k>=1, wherein V pertains to a set of nonterminals, w₁,...,wₖ all pertain to a set of terminal symbols, and |> is an operator ordering choices of terminal symbols w₁,...,wₖ for a same nonterminal V, where V -> w₁ is preferred to V -> w₂ if there is a guarded production rule V -> w₁ |> w₂ in G,
wherein the plurality of guarded production rules is configured to generate the plurality of respective possible idiomatic functions, and
wherein the processing system is configured to select the idiomatic function based at least in part on the guarded production rules from which the plurality of possible idiomatic functions has been generated.

9. The method according to any one of claims 7 to 8, further comprising, for each non-semantically-meaningful variable of the at least one non-semantically-meaningful variable:
querying a language model pre-trained on human-written code with a query that includes a portion of the computer program that precedes the respective non-semantically-meaningful variable; and
receiving the respective semantically-meaningful variable from the pre-trained language model as a response to the query;
wherein replacing the at least one non-semantically-meaningful variable with the at least one respective semantically-meaningful variable comprises:
replacing each of the at least one non-semantically-meaningful variable in the computer program with the respective semantically-meaningful variable based at least in part on receiving the respective semantically-meaningful variable from the pre-trained language model.

10. The method according to any one of claims 7 to 9, wherein synthesizing the computer program to include the one or more idiomatic functions comprises at least one of the following:
configuring at least one of the one or more idiomatic functions to extract date-time information from a string, select a date-time format from a plurality of date-time formats based at least in part on a determination that a sample output of the one or more sample outputs results from application of the selected date-time format to a corresponding sample input of the one or more sample inputs, and apply the selected date-time format to the date-time information that is extracted from the string, wherein the date-time information indicates at least one of a date or a time; or
configuring at least one of the one or more idiomatic functions to extract a number from a string, select a number format from a plurality of number formats based at least in part on a determination that a sample output of the one or more sample outputs results from application of the selected number format to a corresponding sample input of the one or more sample inputs, and apply the selected number format to the number that is extracted from the string.

11. The method according to any one of claims 7 to 10, further comprising:
assigning a plurality of rankings to a plurality of respective possible computer programs that have a same functionality based at least in part on readability of the plurality of respective possible computer programs, the plurality of possible computer programs including the computer program, the same functionality being the functionality that is configured to generate the one or more sample outputs from the one or more respective sample inputs; and
selecting the computer program from the plurality of possible computer programs based at least in part on the ranking of the computer program being no less than the ranking of each other possible computer program that is capable of producing an expected result.

12. A computer program product comprising a computer-readable storage medium having instructions recorded thereon for enabling a processor-based system to perform the method of one of claims 7 to 11.

## Patentansprüche

1. System (106A, 600, 1200) zum Synthetisieren eines Computerprogramms, um eine oder mehrere idiomatische Funktionen und wenigstens eine semantisch bedeutungsvolle Variable einzubeziehen, unter Verwendung von "Programming by Example", wobei das System umfasst:
einen Speicher (1220); und
ein mit dem Speicher gekoppeltes Verarbeitungssystem (902, 1210), wobei das Verarbeitungssystem dazu eingerichtet ist:
eine oder mehrere Beispiel-Eingaben (626) und eine oder mehrere entsprechende Beispiel-Ausgaben (628) von einem Benutzer zu empfangen;
eine Eingabe aus den Beispiel-Eingaben zu identifizieren, die keine entsprechende Ground-Truth-Ausgabe umfasst und eine entsprechende Beispiel-Ausgabe umfasst, der ein Entropiewert zugewiesen ist, der über einem Schwellenwert liegt, als signifikante Eingabe, wobei Entropie ein Maß für Unsicherheit ist;
die identifizierte signifikante Eingabe dem Benutzer anzuzeigen;
einer Ground-Truth-Ausgabe (550) von dem Benutzer zu empfangen, die der signifikanten Eingabe entspricht;
das Computerprogramm (638) zu synthetisieren, um die eine oder mehrere idiomatische Funktionen einzubeziehen (640), indem die eine oder mehreren idiomatischen Funktionen so eingerichtet werden, dass sie eine Funktionalität aufweisen, die dazu eingerichtet ist, die eine oder mehreren Beispiel-Ausgaben aus den einen oder mehreren entsprechenden Beispiel-Eingaben zu erzeugen und einer Konvention einer zieldomänen-spezifischen Sprache zu entsprechen, die mit einer textuellen Darstellung des Computerprogramms assoziiert ist, die dem Benutzer angezeigt werden soll, wobei das Synthetisieren des Computerprogramms, um die einen oder mehreren idiomatischen Funktionen einzubeziehen, das Identifizieren einer Menge möglicher Computerprogramme umfasst, aus der das Computerprogramm ausgewählt werden soll, basierend wenigstens teilweise darauf, dass jedes mögliche Computerprogramm in der Menge zudem dazu eingerichtet ist, die Ground-Truth-Ausgabe aus der signifikanten Eingabe zu generieren;
wenigstens eine nicht-semantisch-bedeutungsvolle Variable zu ersetzen, die unter den einen oder den mehreren idiomatischen Funktionen enthalten ist, durch wenigstens eine entsprechende semantisch-bedeutungsvolle Variable (632), wobei jede semantisch bedeutungsvolle Variable einen Namen umfasst, der aus einem Wortschatz einer Sprache abgeleitet ist und wenigstens teilweise auf einem Kontext basiert, in dem die semantisch bedeutungsvolle Variable verwendet wird, und jede nicht-semantisch bedeutungsvolle Variable einen Namen hat, der wenigstens entweder nicht aus dem Wortschatz der Sprache abgeleitet ist oder nicht wenigstens teilweise auf dem Kontext basiert, in dem die semantisch bedeutungsvolle Variable verwendet wird; und
zu bewirken, dass die textuelle Darstellung des Computerprogramms, die die eine oder mehreren idiomatischen Funktionen und die wenigstens eine darin enthaltene semantisch bedeutungsvolle Variable umfasst, dem Benutzer angezeigt wird, von dem die eine oder mehrere Beispiel-Eingaben und die eine oder mehrere entsprechenden Beispiel-Ausgaben empfangen werden.

2. System nach Anspruch 1, bei dem das Verarbeitungssystem dazu eingerichtet ist:
aus einer Vielzahl möglicher idiomatischer Funktionen, die allesamt die eine oder mehrere Beispiel-Ausgaben aus der einen oder mehreren jeweiligen Beispiel-Eingaben erzeugen, mit Ausnahme der identifizierten signifikanten Eingabe, um die empfangene Ground-Truth-Ausgabe aus der identifizierten signifikanten Eingabe zu erzeugen und einer Konvention einer zieldomänen-spezifischen Sprache zu entsprechen, eine idiomatische Funktion aus der einen oder mehreren idiomatischen Funktionen unter Verwendung einer geschützten kontextfreien Grammatik G auszuwählen,
wobei die geschützte kontextfreie Grammatik eine Vielzahl von geschützten Produktionsregeln umfasst, wobei jede Produktionsregel die Form V--> w₁ |> w₂ |> ... |> wₖ, k>=1, wobei V zu einer Menge von Nichtterminalen gehört, w₁, ... ,wₖ allesamt zu einer Menge von Terminalsymbolen gehören und |> ein Operator ist, der die Auswahl der Terminalsymbole w₁, ... ,wₖ für dasselbe Nichtterminal V ordnet, wobei V-> w₁ gegenüber V-> w₂ bevorzugt wird, wenn es in G eine geschützte Produktionsregel V--> w₁ |> w2 gibt,
wobei die Vielzahl geschützter Produktionsregeln so eingerichtet ist, dass sie die Vielzahl jeweiliger möglicher idiomatischer Funktionen erzeugt, und
das Verarbeitungssystem dazu eingerichtet ist, die idiomatische Funktion wenigstens teilweise auf der Grundlage der geschützten Produktionsregeln auszusuchen, aus denen die Vielzahl möglicher idiomatischer Funktionen erzeugt wurde.

3. System nach einem der Ansprüche 1 bis 2, bei dem das Verarbeitungssystem dazu eingerichtet ist, für jede nicht-semantisch-bedeutungsvolle Variable der wenigstens einen nicht-semantisch-bedeutungsvollen Variable:
ein Sprachmodell abzufragen, das auf von Menschen geschriebenem Code vortrainiert wurde, mit einer Abfrage, die einen Abschnitt des Computerprogramms umfasst, der der jeweiligen nicht-semantisch-bedeutungsvollen Variablen vorausgeht; und
die jeweilige nicht-semantisch-bedeutungsvolle Variable in dem Computerprogramm durch die jeweilige semantisch-bedeutungsvolle Variable zu ersetzen, wenigstens teilweise basierend auf dem Empfang der jeweiligen semantisch-bedeutungsvollen Variable aus dem vortrainierten Sprachmodell.

4. System nach einem der Ansprüche 1 bis 3, bei dem das Verarbeitungssystem dazu eingerichtet ist:
wenigstens eine der einen oder mehreren idiomatischen Funktionen so einzurichten, dass sie die folgenden Tätigkeiten ausführen:
Datums-Zeitinformationen, die wenigstens entweder ein Datum oder eine Uhrzeit angeben, aus einer Zeichenfolge zu extrahieren;
ein Datums-Zeitformat aus einer Vielzahl von Datums-Zeitformaten, wenigstens teilweise basierend auf der Bestimmung auszuwählen, dass eine der einen oder mehreren Beispiel-Ausgaben aus der Anwendung des ausgewählten Datums-Zeitformats auf eine entsprechende der einen oder mehreren Beispiel-Eingaben resultiert; und
das ausgewählte Datums-Zeitformat auf die aus der Zeichenfolge extrahierten Datums-Zeitinformationen anzuwenden.

5. System nach einem der Ansprüche 1 bis 4, bei dem das Verarbeitungssystem dazu eingerichtet ist:
wenigstens eine der einen oder mehreren idiomatischen Funktionen so einzurichten, dass sie die folgenden Tätigkeiten ausführen:
eine Zahl aus einer Zeichenfolge zu extrahieren;
ein Zahlenformat aus einer Vielzahl von Zahlenformaten wenigstens teilweise basierend auf einer Bestimmung auszuwählen, dass eine der einen oder mehreren Beispiel-Ausgaben aus der Anwendung des ausgewählten Zahlenformats aus einer entsprechenden der einen oder mehreren Beispiel-Eingaben resultiert; und
das ausgewählte Zahlenformat auf die Zahl, die aus der Zeichenfolge extrahiert wird, anzuwenden.

6. System nach einem der Ansprüche 1 bis 5, bei dem das Verarbeitungssystem zudem dazu eingerichtet ist:
eine Vielzahl von jeweiligen möglichen Computerprogrammen, die dieselbe Funktionalität aufweisen, mit einer Vielzahl von Ranglisten zu versehen, wenigstens teilweise basierend auf der Lesbarkeit der Vielzahl von jeweiligen möglichen Computerprogrammen, wobei die Vielzahl möglicher Computerprogramme das Computerprogramm umfassen und die gleiche Funktionalität eine Funktionalität ist, die dazu eingerichtet ist, die eine oder mehrere Beispiel-Ausgaben aus der einen oder mehreren jeweiligen Beispiel-Eingaben zu erzeugen; und
das Computerprogramm aus der Vielzahl möglicher Computerprogramme wenigstens teilweise basierend darauf auszuwählen, dass die Rangfolge des Computerprogramms nicht niedriger ist als die Rangfolge jedes anderen möglichen Computerprogramms.

7. Verfahren zum Synthetisieren eines Computerprogramms, um darin eine oder mehrere idiomatische Funktionen und wenigstens eine semantisch bedeutungsvolle Variable unter Verwendung von Programmierung anhand von Beispielen einzubeziehen, wobei das Verfahren von einem Computersystem ausgeführt wird und das Verfahren umfasst:
Empfangen (202) einer oder mehrerer Beispiel-Eingaben (626) und einer oder mehrerer entsprechender Beispiel-Ausgaben (628) von einem Benutzer;
Identifizieren einer Eingabe aus den Beispiel-Eingaben, die keine entsprechende Ground-Truth-Ausgabe hat und eine entsprechende Beispiel-Ausgabe hat, der ein Entropiewert zugewiesen ist, der über einem Schwellenwert liegt, als signifikante Eingabe, wobei Entropie ein Maß für Unsicherheit ist;
Anzeigen der identifizierten signifikanten Eingabe für den Benutzer;
Empfangen einer Ground-Truth-Ausgabe (550) von dem Benutzer, die der signifikanten Eingabe entspricht;
Synthetisieren (206) des Computerprogramms (638), um eine oder mehrere idiomatische Funktionen (640) einzubeziehen, indem die eine oder mehreren idiomatischen Funktionen so eingerichtet werden, dass sie eine Funktionalität aufweisen, die dazu eingerichtet ist, die eine oder mehreren Beispiel-Ausgaben aus den einen oder mehreren jeweiligen Beispiel-Eingaben zu generieren und einer Konvention einer zieldomänen-spezifischen Sprache zu entsprechen, die mit einer textuellen Darstellung des Computerprogramms assoziiert ist, die dem Benutzer angezeigt werden soll, wobei das Synthetisieren des Computerprogramms, um die einen oder mehrere idiomatischen Funktionen zu umfassen, das Identifizieren einer Menge möglicher Computerprogramme umfasst, aus der das Computerprogramm ausgewählt werden soll, basierend wenigstens teilweise darauf, dass jedes mögliche Computerprogramm in der Menge zudem dazu eingerichtet ist, die Ground-Truth-Ausgabe aus der signifikanten Eingabe zu erzeugen;
Ersetzen (208) wenigstens einer nicht-semantisch-bedeutungsvollen Variablen, die unter der einen oder den mehreren idiomatischen Funktionen enthalten ist, durch wenigstens eine entsprechende semantisch-bedeutungsvolle Variable (632), wobei jede semantisch bedeutungsvolle Variable einen Namen hat, der aus einem Vokabular einer Sprache abgeleitet ist und wenigstens teilweise auf einem Kontext basiert, in dem die semantisch bedeutungsvolle Variable verwendet wird, und jede nicht-semantisch bedeutungsvolle Variable einen Namen hat, der wenigstens entweder nicht aus dem Vokabular der Sprache abgeleitet ist oder nicht wenigstens teilweise auf dem Kontext basiert, in dem die semantisch bedeutungsvolle Variable verwendet wird; und
Veranlassen (210), dass die textuelle Darstellung des Computerprogramms, einschließlich der einen oder mehreren idiomatischen Funktionen und der wenigstens einen darin enthaltenen semantisch bedeutungsvollen Variablen, dem Benutzer angezeigt wird, von dem die eine oder mehreren Beispiel-Eingaben und die eine oder mehreren entsprechenden Beispiel-Ausgaben empfangen werden.

8. Verfahren nach Anspruch 7, bei dem das Synthetisieren des Computerprogramms, um die eine oder mehreren idiomatischen Funktionen einzubeziehen, umfasst:
aus einer Vielzahl möglicher idiomatischer Funktionen, die allesamt die eine oder mehrere Beispiel-Ausgaben aus der einen oder mehreren jeweiligen Beispiel-Eingaben erzeugen, mit Ausnahme der identifizierten signifikanten Eingabe, um die empfangene Ground-Truth-Ausgabe aus der identifizierten signifikanten Eingabe zu erzeugen und einer Konvention einer zieldomänenspezifischen Sprache zu entsprechen, Auswählen einer idiomatischen Funktion aus der einen oder mehreren idiomatischen Funktionen unter Verwendung einer geschützten kontextfreien Grammatik G,
wobei die geschützte kontextfreie Grammatik eine Vielzahl von geschützten Produktionsregeln umfasst, wobei jede Produktionsregel die Form V--> w₁ |> w₂ |> ... |> wₖ, k>=1, wobei V zu einer Menge von Nichtterminalen gehört, w₁, ... ,wₖ allesamt zu einer Menge von Terminalsymbolen gehören und |> ein Operator ist, der die Auswahl der Terminalsymbole w₁, ... ,wₖ für dasselbe Nichtterminal V ordnet, wobei V-> w₁ gegenüber V-> w₂ bevorzugt wird, wenn es in G eine geschützte Produktionsregel V--> w₁ |> w2 gibt,
wobei die Vielzahl geschützter Produktionsregeln so eingerichtet ist, dass sie die Vielzahl jeweiliger möglicher idiomatischer Funktionen erzeugt, und
das Verarbeitungssystem dazu eingerichtet ist, die idiomatische Funktion wenigstens teilweise auf der Grundlage der geschützten Produktionsregeln auszusuchen, aus denen die Vielzahl möglicher idiomatischer Funktionen erzeugt wurde.

9. Verfahren nach einem der Ansprüche 7 bis 8, das zudem für jede nicht-semantisch-bedeutungsvolle Variable der wenigstens einen nicht-semantisch-bedeutungsvollen Variable umfasst:
Abfragen eines Sprachmodells, das auf von Menschen geschriebenem Code vortrainiert wurde, mit einer Abfrage, die einen Abschnitt des Computerprogramms umfasst, der der jeweiligen nicht-semantisch-bedeutungsvollen Variablen vorausgeht; und
Empfangen der jeweiligen semantisch-bedeutungsvollen Variablen von dem vortrainierten Sprachmodell als Antwort auf die Abfrage;
wobei das Ersetzen der wenigstens einen nicht-semantisch-bedeutungsvollen Variablen durch die wenigstens eine jeweilige semantisch-bedeutungsvolle Variable umfasst:
Ersetzen jeder der wenigstens einen nicht-semantisch-bedeutungsvollen Variablen in dem Computerprogramm durch die jeweilige semantisch-bedeutungsvolle Variable, basierend wenigstens teilweise auf dem Empfang der jeweiligen semantisch-bedeutungsvollen Variablen von dem vortrainierten Sprachmodell.

10. Verfahren nach einem der Ansprüche 7 bis 9, bei dem das Synthetisieren des Computerprogramms, um die eine oder mehrere idiomatische Funktionen einzubeziehen, wenigstens eine der folgenden Tätigkeiten umfasst:
Konfigurieren wenigstens einer der einen oder mehreren idiomatischen Funktionen, um Datums-Zeitinformationen aus einer Zeichenfolge zu extrahieren, Auswählen eines Datums-Zeitformats aus einer Vielzahl von Datums-Zeitformaten, wenigstens teilweise basierend auf der Bestimmung, dass eine Beispielausgabe der einen oder mehreren Beispiel-Ausgaben aus der Anwendung des ausgewählten Datums-Zeitformats aus einer entsprechenden Beispiel-Eingabe der einen oder mehreren Beispiel-Eingaben resultiert, und Anwenden des ausgewählten Datums-Zeitformats auf die aus der Zeichenfolge extrahierten Datums-Zeitinformationen, wobei die Datums-Zeitinformationen wenigstens entweder ein Datum oder eine Zeit angeben; oder
Konfigurieren wenigstens eine der einen oder mehreren idiomatischen Funktionen, um eine Zahl aus einer Zeichenfolge zu extrahieren, ein Zahlenformat aus einer Vielzahl von Zahlenformaten auszuwählen, wenigstens teilweise basierend auf der Bestimmung, dass eine Beispielausgabe der einen oder mehreren Beispiel-Ausgaben aus der Anwendung des ausgewählten Zahlenformats auf eine entsprechende Beispiel-Eingabe der einen oder mehreren Beispiel-Eingaben resultiert, und das ausgewählte Zahlenformat auf die Zahl anzuwenden, die aus der Zeichenfolge extrahiert wurde.

11. Verfahren nach einem der Ansprüche 7 bis 10, weiterhin umfassend:
Zuweisen einer Vielzahl von Ranglisten zu einer Vielzahl von jeweiligen möglichen Computerprogrammen, die dieselbe Funktionalität aufweisen, wenigstens teilweise basierend auf der Lesbarkeit der Vielzahl von jeweiligen möglichen Computerprogrammen, wobei die Vielzahl von möglichen Computerprogrammen das Computerprogramm umfasst, wobei die gleiche Funktionalität die Funktionalität ist, die dazu eingerichtet ist, die eine oder mehrere Beispiel-Ausgaben aus der einen oder mehreren jeweiligen Beispiel-Eingaben zu erzeugen; und
Auswählen des Computerprogramms aus der Vielzahl möglicher Computerprogramme, wenigstens teilweise basierend darauf, dass die Rangfolge des Computerprogramms nicht niedriger ist als die Rangfolge jedes anderen möglichen Computerprogramms, das in der Lage ist, ein erwartetes Ergebnis zu erzeugen.

12. Computerprogrammerzeugnis, das ein computerlesbares Speichermedium umfasst, auf dem Anweisungen aufgezeichnet sind, um es einem prozessorbasierten System zu ermöglichen, das Verfahren nach einem der Ansprüche 7 bis 11 auszuführen.

## Revendications

1. Système (106A, 600, 1200) de synthèse d'un programme informatique pour y inclure une ou plusieurs fonctions idiomatiques et au moins une variable sémantiquement significative, à l'aide d'une programmation par l'exemple, le système comprenant :
une mémoire (1220) ; et
un système de traitement (902, 1210) couplé à la mémoire, le système de traitement étant configuré pour :
recevoir d'un utilisateur une ou plusieurs entrées d'échantillon (626) et une ou plusieurs sorties d'échantillon (628) respectives ;
identifier, parmi les entrées d'échantillon, une entrée n'ayant pas une sortie de réalité de terrain correspondante et ayant une sortie d'échantillon correspondante à laquelle est attribuée une mesure d'entropie qui est supérieure à un seuil, en tant qu'entrée significative, dans lequel l'entropie est une mesure de l'incertitude ;
afficher à l'utilisateur l'entrée significative identifiée ;
recevoir de l'utilisateur une sortie de réalité de terrain (550) qui correspond à l'entrée significative ;
synthétiser le programme informatique (638) pour inclure une ou plusieurs fonctions idiomatiques (640) en configurant la ou les plusieurs fonctions idiomatiques de manière à avoir une fonctionnalité qui est configurée pour générer la ou les plusieurs sorties d'échantillon à partir de la ou des plusieurs entrées d'échantillon respectives et se conformer à une convention d'un langage spécifique au domaine cible, qui est associé à une représentation textuelle du programme informatique qui doit être affiché à l'utilisateur, dans lequel la synthèse du programme informatique pour inclure la ou les plusieurs fonctions idiomatiques comprend l'identification d'un ensemble de programmes informatiques possibles parmi lesquels le programme informatique à sélectionner sera choisi sur la base, au moins en partie, du fait que chaque programme informatique possible dans l'ensemble est en outre configuré pour générer la sortie de réalité de terrain à partir de l'entrée significative ;
remplacer au moins une variable non sémantiquement significative qui est incluse parmi la ou plusieurs fonctions idiomatiques, par au moins une variable sémantiquement significative correspondante (632), chaque variable sémantiquement significative ayant un nom qui est dérivé du vocabulaire d'un langage et qui est basé, au moins en partie, sur un contexte dans lequel la variable sémantiquement significative est utilisée, chaque variable non sémantiquement significative ayant un nom qui n'est pas dérivé du vocabulaire du langage et/ou qui n'est pas basé, au moins en partie, sur le contexte dans lequel la variable sémantiquement significative est utilisée ; et
provoquer l'affichage, à l'utilisateur à partir duquel la ou les plusieurs entrées d'échantillon et la ou les plusieurs sorties d'échantillon sont reçues, de la représentation textuelle du programme informatique, y compris la ou les plusieurs fonctions idiomatiques et l'au moins une variable sémantiquement significative.

2. Système selon la revendication 1, dans lequel le système de traitement est configuré pour :
parmi une pluralité de fonctions idiomatiques possibles générant toutes la ou les plusieurs sorties d'échantillon à partir de la ou des plusieurs entrées d'échantillon respectives, à l'exception de l'entrée significative identifiée, afin de générer la sortie de réalité de terrain reçue à partir de l'entrée significative identifiée, et se conformer à une convention d'un langage spécifique au domaine cible, sélectionner une fonction idiomatique parmi la ou les plusieurs fonctions idiomatiques à l'aide d'une grammaire hors contexte gardée G,
dans lequel la grammaire hors contexte gardée comprend une pluralité de règles de production gardées, chaque règle de production étant de la forme V → w₁ |> *w*₂ |> ... |> wₖ, k >= 1, où V se rapporte à un ensemble de non-terminaux, w₁, ..., wₖ se rapportent tous à un ensemble de symboles terminaux, et |> est un opérateur ordonnant les choix de symboles terminaux w₁, ..., wₖ pour un même non-terminal V, où V → w₁ est préféré à V → w₂ s'il existe une règle de production gardée V → w₁ |> *w*₂ dans G,
dans lequel la pluralité de règles de production gardées est configurée pour générer la pluralité de fonctions idiomatiques possibles respectives, et
dans lequel le système de traitement est configuré pour sélectionner la fonction idiomatique sur la base au moins en partie des règles de production gardées à partir desquelles la pluralité de fonctions idiomatiques possibles a été générée.

3. Système selon l'une quelconque des revendications 1 et 2, dans lequel le système de traitement est configuré, pour chaque variable non sémantiquement significative de l'au moins une variable non sémantiquement significative, pour :
interroger un modèle de langage pré-entraîné sur du code écrit par un humain avec une requête qui comprend une portion du programme informatique qui précède la variable non sémantiquement significative respective ; et
remplacer la variable non sémantiquement significative respective dans le programme informatique par la variable sémantiquement significative respective, sur la base au moins en partie de la réception de la variable sémantiquement significative respective à partir du modèle de langage pré-entraîné.

4. Système selon l'une quelconque des revendications 1 à 3, dans lequel le système de traitement est configuré pour :
configurer au moins une de la ou des plusieurs fonctions idiomatiques pour effectuer les opérations suivantes :
extraire des informations de date-heure, qui indiquent une date et/ou une heure, d'une chaîne de caractères ;
sélectionner un format date-heure parmi une pluralité de formats date-heure sur la base au moins en partie d'une détermination qu'une sortie d'échantillon de la ou des plusieurs sorties d'échantillon résulte de l'application du format date-heure sélectionné à une entrée d'échantillon correspondante de la ou des plusieurs entrées d'échantillon ; et
appliquer le format date-heure sélectionné aux informations date-heure qui sont extraites de la chaîne de caractères.

5. Système selon l'une quelconque des revendications 1 à 4, dans lequel le système de traitement est configuré pour :
configurer au moins une de la ou des plusieurs fonctions idiomatiques pour effectuer les opérations suivantes :
extraire un nombre d'une chaîne de caractères ;
sélectionner un format de nombre parmi une pluralité de formats de nombre sur la base au moins en partie d'une détermination qu'une sortie d'échantillon de la ou des plusieurs sorties d'échantillon résulte de l'application du format de nombre sélectionné à une entrée d'échantillon correspondante de la ou des plusieurs entrées d'échantillon ; et
appliquer le format de nombre sélectionné au nombre qui est extrait de la chaîne de caractères.

6. Système selon l'une quelconque des revendications 1 à 5, dans lequel le système de traitement est en outre configuré pour :
attribuer une pluralité de classements à une pluralité de programmes informatiques possibles respectifs qui ont une même fonctionnalité sur la base au moins en partie de la lisibilité de la pluralité de programmes informatiques possibles respectifs, la pluralité de programmes informatiques possibles comprenant le programme informatiques, la même fonctionnalité étant une fonctionnalité qui est configurée pour générer la ou les plusieurs sorties d'échantillon à partir de la ou des plusieurs entrées d'échantillon respectives ; et
sélectionner le programme informatique parmi la pluralité de programmes informatiques possibles sur la base au moins en partie du fait que le classement du programme informatique n'est pas inférieur au classement de chaque autre programme informatique possible.

7. Procédé de synthèse d'un programme informatique pour y inclure une ou plusieurs fonctions idiomatiques et au moins une variable sémantiquement significative, à l'aide d'une programmation par l'exemple, le procédé étant mis en œuvre par un système informatique, le procédé comprenant :
recevoir (202), d'un utilisateur, une ou plusieurs entrées d'échantillon (626) et une ou plusieurs sorties d'échantillon (628) respectives ;
identifier, parmi les entrées d'échantillon, une entrée n'ayant pas une sortie de réalité de terrain correspondante et ayant une sortie d'échantillon correspondante à laquelle est attribuée une mesure d'entropie qui est supérieure à un seuil, en tant qu'entrée significative, dans lequel l'entropie est une mesure de l'incertitude ;
afficher à l'utilisateur l'entrée significative identifiée ;
recevoir, de l'utilisateur, une sortie de réalité de terrain (550) qui correspond à l'entrée significative ;
synthétiser (206) le programme informatique (638) pour inclure une ou plusieurs fonctions idiomatiques (640) en configurant la ou les plusieurs fonctions idiomatiques de manière à avoir une fonctionnalité qui est configurée pour générer la ou les plusieurs sorties d'échantillon à partir de la ou des plusieurs entrées d'échantillon respectives, et se conformer à une convention d'un langage spécifique au domaine cible, qui est associé à une représentation textuelle du programme informatique qui doit être affiché à l'utilisateur, dans lequel la synthèse du programme informatique pour inclure la ou les plusieurs fonctions idiomatiques comprend l'identification d'un ensemble de programmes informatiques possibles parmi lesquels le programme informatique doit être sélectionné sur la base au moins en partie du fait que chaque programme informatique possible dans l'ensemble est en outre configuré pour générer la sortie de réalité de terrain à partir de l'entrée significative ;
remplacer (208) au moins une variable non sémantiquement significative qui est incluse parmi la ou les plusieurs fonctions idiomatiques, par au moins une variable sémantiquement significative correspondante (632), chaque variable sémantiquement significative ayant un nom qui est dérivé du vocabulaire d'un langage et qui est basé, au moins en partie, sur un contexte dans lequel la variable sémantiquement significative est utilisée, chaque variable non sémantiquement significative ayant un nom qui n'est pas dérivé du vocabulaire du langage et/ou n'est pas basé, au moins en partie, sur le contexte dans lequel la variable sémantiquement significative est utilisée ; et
provoquer (210) l'affichage, à l'utilisateur à partir duquel la ou les plusieurs entrées d'échantillon et la ou les plusieurs sorties d'échantillon sont reçues, de la représentation textuelle du programme informatique, y compris la ou les plusieurs fonctions idiomatiques et l'au moins une variable sémantiquement significative.

8. Procédé selon la revendication 7, dans lequel la synthèse du programme informatique pour inclure la ou les plusieurs fonctions idiomatiques comprend :
parmi une pluralité de fonctions idiomatiques possibles générant toutes la ou les plusieurs sorties d'échantillon à partir de la ou des plusieurs entrées d'échantillon respectives, à l'exception de l'entrée significative identifiée, afin de générer la sortie de réalité de terrain reçue à partir de l'entrée significative identifiée, et de se conformer à une convention d'un langage spécifique au domaine cible, la sélection d'une fonction idiomatique de la ou des plusieurs fonctions idiomatiques à l'aide d'une grammaire hors contexte gardée G,
dans lequel la grammaire hors contexte gardée comprend une pluralité de règles de production gardées, chaque règle de production étant de la forme V → w₁ |> w₂ |> ... |> wₖ, k >= 1, où V se rapporte à un ensemble de non-terminaux, w₁, ..., wₖ se rapportent à un ensemble de symboles terminaux, et |> est un opérateur ordonnant les choix de symboles terminaux w₁, ..., wₖ pour un même non-terminal V, où V → w₁ est préféré à V → w₂ s'il existe une règle de production gardée V → w₁ |> w₂ dans G,
dans lequel la pluralité de règles de production gardées est configurée pour générer la pluralité de fonctions idiomatiques possibles respectives, et
dans lequel le système de traitement est configuré pour sélectionner la fonction idiomatique sur la base au moins en partie des règles de production gardées à partir desquelles la pluralité de fonctions idiomatiques possibles a été générée.

9. Procédé selon l'une quelconque des revendications 7 et 8, comprenant en outre, pour chaque variable non sémantiquement significative de l'au moins une variable non sémantiquement significative, :
interroger un modèle de langage pré-entraîné sur du code écrit par un humain avec une requête qui comprend une portion du programme informatique qui précède la variable non sémantiquement significative respective ; et
recevoir la variable sémantiquement significative respective à partir du modèle de langage pré-entraîné en tant que réponse à la requête ;
dans lequel le remplacement de l'au moins une variable non sémantiquement significative par l'au moins une variable sémantiquement significative respective comprend :
remplacer chacune de l'au moins une variable non sémantiquement significative dans le programme informatique par la variable sémantiquement significative respective sur la base au moins en partie de la réception de la variable sémantiquement significative respective à partir du modèle de langage pré-entraîné.

10. Procédé selon l'une quelconque des revendications 7 à 9, dans lequel la synthèse du programme informatique pour inclure la ou les plusieurs fonctions idiomatiques comprend au moins l'une des étapes suivantes :
configurer au moins une de la ou des plusieurs fonctions idiomatiques afin d'extraire des informations de date-heure d'une chaîne de caractères, de sélectionner un format date-heure parmi une pluralité de formats date-heure, sur la base au moins en partie d'une détermination qu'une sortie d'échantillon de la ou des plusieurs sorties d'échantillon résulte de l'application du format date-heure sélectionné à une entrée d'échantillon correspondante de la ou des plusieurs entrées d'échantillon, et d'appliquer le format date-heure sélectionné aux informations de date-heure qui sont extraites de la chaîne de caractères, dans lequel les informations de date-heure indiquent une date et/ou une heure ; ou
configurer au moins une de la ou des plusieurs fonctions idiomatiques afin d'extraire un nombre d'une chaîne de caractères, de sélectionner un format de nombre parmi une pluralité de formats de nombre sur la base au moins en partie d'une détermination qu'une sortie d'échantillon de la ou des plusieurs sorties d'échantillon résulte de l'application du format de nombre sélectionné à une entrée d'échantillon correspondante de la ou des plusieurs entrées d'échantillon, et d'appliquer le format de nombre sélectionné au nombre qui est extrait de la chaîne de caractères.

11. Procédé selon l'une quelconque des revendications 7 à 10, comprenant en outre :
attribuer une pluralité de classements à une pluralité de programmes informatiques possibles respectifs qui ont une même fonctionnalité sur la base au moins en partie de la lisibilité de la pluralité de programmes informatiques possibles respectifs, la pluralité de programmes informatiques possibles comprenant le programme informatique, la même fonctionnalité étant une fonctionnalité qui est configurée pour générer la ou les plusieurs sorties d'échantillon à partir de la ou des plusieurs entrées d'échantillon respectives ; et
sélectionner le programme informatique parmi la pluralité de programmes informatiques possibles sur la base au moins en partie du fait que le classement du programme informatique n'est pas inférieur au classement de chaque autre programme informatique possible qui est capable de produire un résultat attendu.

12. Produit de programme informatique comprenant un support de stockage lisible par ordinateur sur lequel sont enregistrées des instructions permettant à un système basé sur un processeur d'effectuer le procédé de l'une des revendications 7 à 11.
